# EUROPEAN PATENT APPLICATION

(11) **EP 4 020 288 A1**
(43) Date of publication of application: **29.06.2022**
(21) Application number: 21198465.3
(22) Date of filing: 23.09.2021
(51) Int. Cl.: G06F 21/60, G06F 21/64, H04W 12/10, G06F 21/79

(54) **LOW OVERHEAD MEMORY INTEGRITY WITH ERROR CORRECTION CAPABILITIES**

(30) Priority: 26.12.2020 US 202017134344
(71) Applicant: Intel Corporation, Santa Clara, CA 95054 (US)
(72) Inventor: CHHABRA, Siddhartha, Portland, 97229 (US); PEDDIREDDY, Manjula, Santa Clara, 95054 (US); AGARWAL, Rajat, Portland, 97229 (US)
(74) Representative: Goddar, Heinz J.

(57) **Abstract**

Techniques for Scalable Memory Integrity and Enhanced Reliability, Availability, and Serviceability (SMIRAS) based systems are described. A SMIRAS based system may be enabled to use an integrity-based metadata organization that stores data, metadata, and a first portion of ECC data together in memory and a second portion of ECC data in sequestered memory; or using a compression based organization that stores compressed data, compression metadata, and an second portion of ECC data as a cacheline.

## Description

### BACKGROUND

Memory integrity operates by associating a cryptographic message authentication code (MAC) with each dataline in memory. The MAC is generated when data is written to memory and verified when the data is read from memory. If data was modified when resident in memory, the MAC will not match and result in the modification attack being detected (a security exception can then be signaled to notify software of the attack).

Modern processors are designed to protect sensitive data in memory from both hardware and software attacks. Some processors provide cryptographic mechanisms for encryption, integrity, and replay protection. Memory encryption protects the confidentiality of memory-resident data. On the other hand, integrity protection prevents an attacker from causing any hidden modifications to the ciphertext (i.e., encrypted data, as opposed to plaintext which is unencrypted data) in memory, and replay protection eliminates any undetected temporal substitution of the ciphertext. In the absence of such protections, an attacker with physical access to the system can record snapshots of data lines and replay them at a later point in time.

### BRIEF DESCRIPTION OF DRAWINGS

Various embodiments in accordance with the present disclosure will be described with reference to the drawings, in which:
FIG. 1 illustrates embodiments of a tiered ECC organization in memory.
FIG. 2 illustrates embodiments of a memory layout with SMIRAS.
FIG. 3 illustrates embodiments of systems that utilizes SMIRAS with or without compression.
FIG. 4 illustrates embodiments of different metadata organizations that may be used in a SMIRAS system.
FIG. 5 illustrates embodiments of a memory security engine and its interaction with memory.
FIG. 6 illustrates embodiments of a memory security engine and its interaction with memory.
FIG. 7 illustrates embodiments of a key table 512.
FIG. 8 illustrates an example call flow associated with the PCONFIG instruction.
FIG. 9 illustrates embodiments of a model specific register (MSR) detailing memory encryption capability.
FIG. 10 illustrates embodiments of a model specific register (MSR) detailing memory activation.
FIG. 11 illustrates embodiments of a flow for handing memory requests when using compressed SMIRAS and/or uncompressed SMIRAS.
FIG. 12 illustrates embodiments of an exemplary system.
FIG. 13 illustrates a block diagram of embodiments of a processor 1300 that may have more than one core, may have an integrated memory controller, and may have integrated graphics.
FIG. 14(A) is a block diagram illustrating both an exemplary in-order pipeline and an exemplary register renaming, out-of-order issue/execution pipeline according to embodiments of the invention.
FIG. 14(B) is a block diagram illustrating both an exemplary embodiment of an in-order architecture core and an exemplary register renaming, out-of-order issue/execution architecture core to be included in a processor according to embodiments of the invention.
FIG. 15 illustrates embodiments of execution unit(s) circuitry, such as execution unit(s) circuitry 1462 of FIG. 14(B).
FIG. 16 is a block diagram of a register architecture 1600 according to some embodiments.
FIG. 17 illustrates embodiments of an instruction format.
FIG. 18 illustrates embodiments of the addressing field 1705.
FIG. 19 illustrates embodiments of a first prefix 1701(A). In some embodiments, the first prefix 1701(A) is an embodiment of a REX prefix.
FIG. 20(A) illustrates embodiments of how the R, X, and B fields of the first prefix 1701(A) are used.
FIG. 20(B) illustrates embodiments of how the R, X, and B fields of the first prefix 1701(A) are used.
FIG. 20(C) illustrates embodiments of how the R, X, and B fields of the first prefix 1701(A) are used.
FIG. 20(D) illustrates embodiments of how the R, X, and B fields of the first prefix 1701(A) are used.
FIG. 21(A) illustrates embodiments of a two-byte form of the second prefix 1701(B).
FIG. 21(B) illustrates embodiments of a three-byte form of the second prefix 1701(B).
FIG. 22 illustrates embodiments of a third prefix 1701(C).
FIG. 23 illustrates a block diagram contrasting the use of a software instruction converter to convert binary instructions in a source instruction set to binary instructions in a target instruction set according to embodiments of the invention.

### DETAILED DESCRIPTION

The present disclosure relates to methods, apparatus, systems, and non-transitory computer-readable storage media for low overhead memory integrity with error correction capabilities.

Cloud security providers (CSPs), driven by their customers' requirements, desire cryptographic isolation for the customer workloads running on their platform. In some embodiments, trust domain extensions (TDX) provide isolation on servers using a multi-key total memory encryption engine (MKTME). Per-domain memory integrity is a component of TDX architecture, allowing protection against all software attacks and defense against hardware modification attacks. However, to defend against all hardware attacks, hardware replay protection may be needed.

As noted above, memory integrity operates by associating a MAC with each dataline in memory. The MAC is generated when data is written to memory and verified when the data is read from memory. If data was modified when resident in memory, the MAC will not match and result in the modification attack being detected (a security exception can then be signaled to notify software of the attack). Traditional integrity approaches can suffer from significant performance overheads as the MAC associated with each dataline must be loaded on each access and verified/updated depending on the type of memory access. This additional access results in storage, performance, and bandwidth overheads. Note that traditional memory integrity stores the MAC separately in stolen memory (memory not visible to the OS).

Some server platforms use ECC memories for high availability and the ECC bits move along with the cacheline data, thereby eliminating the additional access and associated performance overheads. However, storing MAC in the ECC bits can result in reduced ECC capabilities (as an example for the most common DDR5 memories, 128b of ECC are needed for 100% single device error correction) and prevent scaling security beyond a certain limit due to the limited number of bits available in the ECC devices.

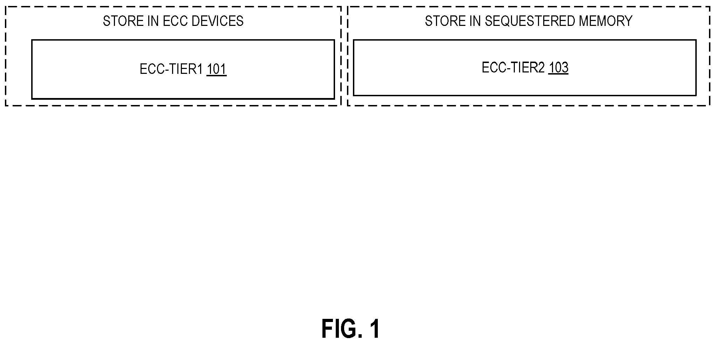

FIG. 1 illustrates embodiments of a tiered ECC organization in memory. ECC_TIER1 101 represents ECC bits that are needed for both error detection and correction and hence are performance critical and are stored in ECC memory. ECC_TIER2 103 is only needed for error correction and hence can be stored in sequestered memory which does not use ECC. On a write to memory, the ECC_TIER2 105 of ECC will be updated which can result in an extra access from sequestered memory. A metadata cache that caches ECC_TIER2 lines is used, in some embodiments, to minimize the additional accesses needed to memory for SMIRAS.

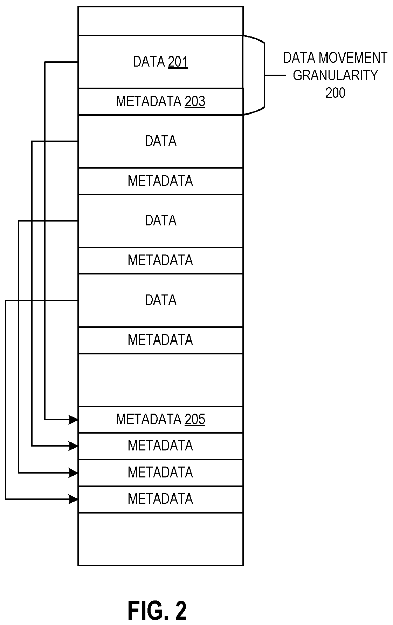

FIG. 2 illustrates embodiments of a memory layout with SMIRAS. At a high-level, SMIRAS sequesters memory to store metadata (e.g., ECC data) on a per-cacheline basis. As shown, a data movement granularity chunk 200 includes a dataline 201 and metadata 203. The metadata 203 is metadata of a first tier needed for error detection and correction. Additional metadata 205 is associated with each granular chunk 200 and is metadata of a second tier needed for error correction alone. This additional memory is stored in sequestered memory.

In some embodiments, a physical device (such as a DDR5 DIMM) includes memory devices that store ECC metadata and memory devices that are not used to store ECC metadata. In some embodiments, all memory devices store ECC metadata by default. Memory devices that use ECC are used to store performance sensitive metadata (e.g., error detection and correction tier of ECC, MAC) and memory devices used for sequestered memory may not use ECC (but may in some embodiments) are used to store the metadata associated with a cacheline that is off the performance critical path (e.g., error correction tier of ECC). In some embodiments, 128 bits of data are stored per write in the memory devices. In some embodiments, additional parity bits (e.g., 8 bits) are also stored.

Detailed herein is a Scalable Memory Integrity and Enhanced RAS (SMIRAS) memory integrity architecture that can use compression. SMIRAS with compression allows for full error correction capabilities and high-strength memory integrity without introducing, or minimizing, the performance overheads of traditional memory integrity approaches. In particular, in some embodiments, SMIRAS takes advantage of extended Reed Solomon codes for error correction codes (ECC) which allows the ECC metadata bits to be split in two tiers, a first tier needed for error detection and correction and a second tier needed for error correction alone. In non-sequestered memory, datalines are stored along with metadata that may include one or more of ECC of the first tier (ECC_TIER1), a MAC, etc. In some embodiments, systems using SMIRAS use a sequestered memory (or a separated portion of memory) to store the second tier of ECC metadata associated with each cacheline (ECC_TIER2). As such, full ECC correction is possible when needed using both the ECC of the first tier and the ECC of the second tier.

In some embodiments, SMIRAS uses ECC supporting devices and sequestered memory devices as a combined metadata store. The ECC devices store the performance sensitive metadata which is needed on reads and the sequestered memory metadata to store metadata that is off the performance path. As an example, a MAC associated with data the size of a cacheline is stored in the ECC devices. Sequestered memory is used to store metadata that is not performance sensitive. As an example, ECC metadata only used for error correction alone is stored in sequestered memory. This secondary ECC metadata only needs to be updated on writes and does not need to be fetched on reads unless there is an error that needs correction. In non-ECC supporting devices, all of the metadata is stored in sequestered memory.

For a compressed embodiment, the dataline is compressed to free up space for the ECC tier (e.g., ECC_TIER2) that would normally be stored in sequestered memory in a default SMIRAS implementation (that is without compression). If the line is compressible, additional accesses for a read-modify-write operation needed on writes with SMIRAS to the ECC tier stored in sequestered memory may be avoided. The dataline is also encrypted using a first encryption algorithm such as the Advanced Encryption Standard (AES). As compression metadata, if left in clear, can reveal information about plaintext the compression metadata is also encrypted. In some embodiments, the compression metadata is encrypted using a narrow block cipher such as Prince, Simon, Speck, etc.

In particular, data is first sent through compression engine (in a core or outside of a core) which attempts to compress the data by 128 bits at a minimum (the next higher granularity of compression is in multiples of 128 bits, in some embodiments). In embodiments that use AES, this is done to ensure that the compressed data can be encrypted with AES which operates at 128-bit granularity.

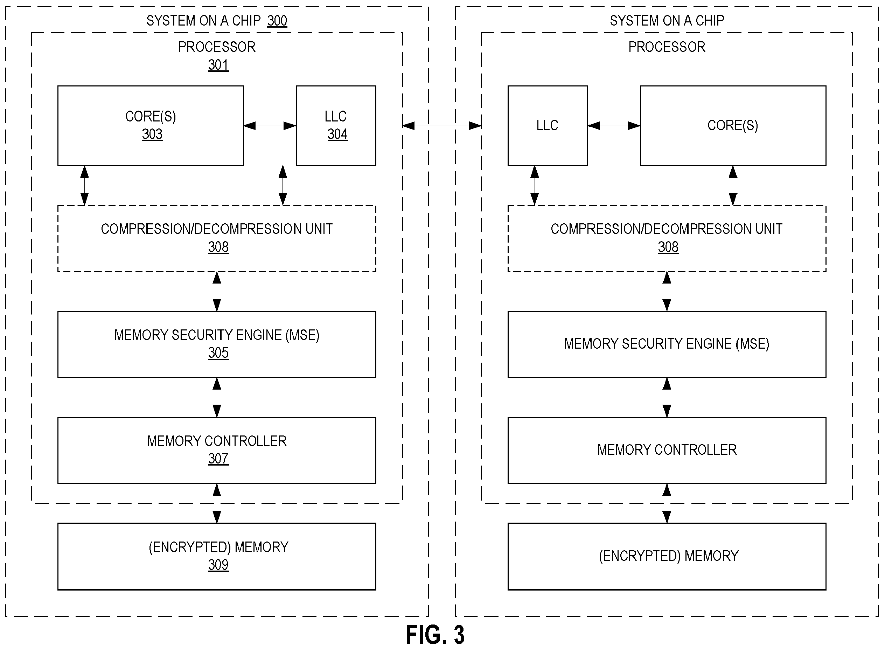

FIG 3 illustrates embodiments of systems that utilizes SMIRAS with or without compression. As shown, a processor 301 or system on a chip (SOC) 300 includes one or more cores 301, a last level cache (LLC) 304 (which would be shared amongst a plurality of cores 303), a memory security engine (MSE) 305 to encrypt or decrypt data, validate data, maintain one or more encryption keys, and/or cache ECC data, and memory controller circuitry 307 to perform reads and write to memory (and, in some embodiments, to perform ECC-based error correction). Each processor 301 couples to memory 309 which may be encrypted. Additionally, the memory 309 may support ECC. Each SOC 300 include the memory 309 in some embodiments. In some embodiments, the MSE 305 is a part of the memory controller circuitry 305.

To support the compression, in some embodiments, the core(s) 303 include instruction support for one or more compression/decompression algorithms. In some embodiments, a dedicated compression/decompression unit 308 that is external to the cores 303 is used.

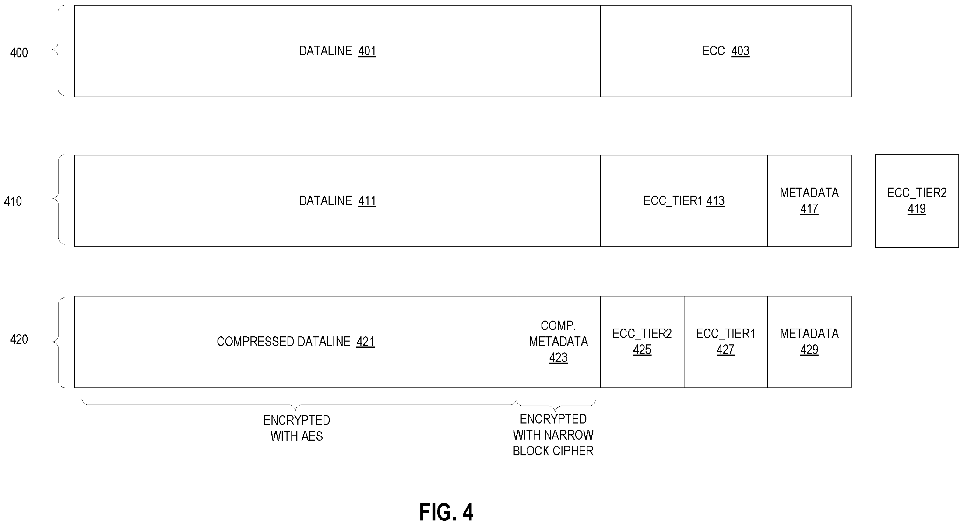

As noted above, in some embodiments, both SMIRAS with compression and SMIRAS without compression are supported. FIG. 4 illustrates embodiments of different metadata organizations that may be used in a SMIRAS system. The first organization 400 shows a cacheline 401 with corresponding ECC 403. This organization may be used in a base configuration where SMIRAS has not been enabled.

The second organization 410 shows a layout for when a cacheline 411 cannot be compressed. In this case, ECC_TIER 1 413 (required for detection and correction) is stored in ECC devices and ECC_TIER2 419 (required for correction alone) is stored in stolen or sequestered memory. The space freed by moving ECC_TIER2 419 is used to store metadata 417 such as a MAC. In this metadata in the ECC devices one bit is used to indicate compression. This information is needed on the return path on reads to know how to get the decrypted data and correct errors if any.

The third organization 420 shows layout when a cacheline 421 can be compressed. In this case, the data cacheline itself stores the ECC_TIER2 data 425 along with compression metadata 423 which is used to decompress the cacheline. Similar to the case where line is uncompressed, the ECC devices store ECC_TIER1 421 and metadata carrying MAC, etc. metadata 429 including a 1-bit compression indicator. In such embodiments, the compression metadata 423may include an indication of which type of compression was used to compress the data 421 within that block. As the compression metadata can leak information about the plaintext data its needs to be protected. When compression is successful, both compression metadata and ECC_TIER2 are stored in the cacheline itself and can naturally use AES-XTS (the encryption algorithm used for data itself and sometimes called XTS-AES where XTS stands for Xor-encrypt-xor-based tweaked-codebook mode with ciphertext stealing) to encrypt the ECC_TIER2 and compression metadata. However, the ECC_TIER2 may be needed for correction by patrol scrubbing logic which scrubs the entire memory (maybe once a day) to prevent accumulation. For patrol scrubbing logic to work independently of the encryption engine (i.e., not have any knowledge of the keys), the ECC_TIER2 is kept, in some embodiments, in plaintext and only the compression metadata is encrypted. However, since compression metadata is 64b and AES operates at 128b granularity, AES cannot be used efficiently (note it is possible to do so but inefficient for hardware with ciphertext stealing). To efficiently protect the compression metadata, narrow block ciphers such as Prince, Simon, Speck, etc. are used.

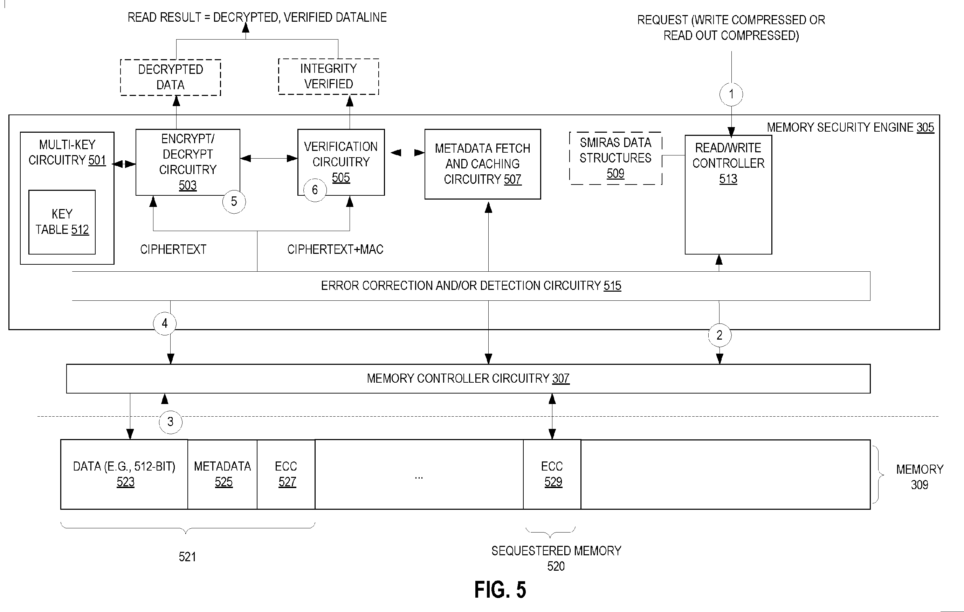

Most germane to SMIRAS, other than the layouts detailed above, is the MSE 305. Note that the MSE 305 may go by other names such as a memory encryption engine (MEE), a secure processor, etc. FIG. 5 illustrates embodiments of a memory security engine and its interaction with memory. The MSE 305 interacts with memory 309 (e.g., reads from or writes to) through memory controller circuitry 307. In this illustration, the memory309 is storing dataline 523, a MAC associated with the dataline 525, and ECC data needed for error detection and correction 527, and ECC data needed for error correction alone 529 is stored in sequestered memory 520. In some embodiments, the ECC data needed for error detection and correction 527 and MAC 525 comprise 128 bits in total, the dataline 525 is 512-bit, and the ECC data needed for error correction alone 529 is 64-bit for each cacheline.

In some embodiments, the MSE 305 includes one or more of multi-key circuitry 501, encryption/decryption circuitry 503, verification circuitry 505, metadata fetch and caching circuitry 507, a read/write controller 513, and/or one or more SMIRAS data structure(s) 509.

The multi-key circuitry 501 provides (e.g., stores and/or generates) multiple encryption keys. In some embodiments, the encryption keys are generated using a hardware random number generator. An example of a hardware random number generator is a physical unclonable function (PUF) circuit. Examples of types of encryption keys include, but are not limited to keys for AES-XTS-128-bit, AES-XTS-256-bit, etc. Typically, software manages the use of keys and can use each of the available keys for encrypting any page of the memory. As such, the multi-key circuitry 501 allows for at least page granular encryption of memory. In some embodiments, a key table 512 stores information about these keys and their usage. The key table 512 may be implemented using any form of memory or storage (e.g., RAM), and may also be implemented directly on memory protection controller 206, in memory 210, and/or using another memory component.

The encryption/decryption circuitry 503 performs encryption and description (e.g., such as AES-XTS-128-bit, AES-XTS-256-bit, etc. In particular, the encryption/decryption circuitry 503 can take in ciphertext and produce decrypted data or take in data and produce ciphertext. In some embodiments, AES-XTS encryption computes a tweak that is derived from a memory address of system memory. The tweak can be a unique location in memory, e.g., two memory sectors containing the same information can each have a unique memory location. The tweak can be represented as a combination of a processor-memory interface (PMI) sector address and index of a block within the sector of memory and may be stored in a tweak buffer when write or read data is received to be encrypted or decrypted.

Error correction and/or detection circuitry 515 performs one or more of: error correction and/or detection for data retrieved from memory 309 and error correction code generation for data to be written to memory 309.

The verification circuitry 505 uses message authentication codes (MACs) to check a dataline for integrity by comparing a calculated MAC value with the stored MAC value. Note the verification circuitry 505 generates the MAC value to be stored alongside a dataline and ECC in some embodiments. In some embodiments, the verification circuitry 505 performs error correction using either ECC_TIER1 and error detection and correction using ECC_TIER1 and ECC_TIER2.

The metadata fetch and caching circuitry 507 fetches ECC data needed for error correction alone (e.g., ECC 529) when an error is detected by the detection code (and caches it), when a correction code not found in a cache of the metadata fetch and caching circuitry 507. Note that for writes, the ECC in sequestered memory is updated on each write (for a maximum of 2 writes).

In some embodiments, one or more SMIRAS data structures 509 stores one or more of an indication of what encryption/decryption algorithm(s) are to be used, addresses for data and metadata, and an indication of which key(s) are to be used, etc.

The read/write controller 513 performs read and write flows from and to memory (for integrity protection). The read/write controller 513 may also track where data and metadata has been written for later retrieval. In some embodiments, the read/write controller 513 comprises one or more state machines. In some embodiments, the read/write controller 513 comprises one or more circuits. In some embodiments, the read/write controller 513 keeps a key data structure (called key table) 512 up-to-date. In other embodiments, another component keeps the key table 512 up-to-date. The key table 512 stores information about the keys to be used by the MSE 305.

For a read, a read request is generated (e.g., from a core) and the MSE 305 receives this request. The MSE 305 issues a read request to the sequestered memory 520 via the memory controller circuitry 307. Sequestered memory may be memory that does not support ECC in some embodiments. Ciphertext is read from memory (e.g., the dataline 523) along with the MAC associated with the dataline 525 and ECC data needed for error detection and correction 527). Note that in some embodiments, these are stored in ECC hardware.

The memory controller circuitry 307 determines if the ciphertext has errors using the ECC data 527. When there are no errors, the dataline 523 be concurrently or sequentially decrypted by the encryption/decryption circuitry 503 and verified using the MAC data 136 by the verification circuitry 505.

In some embodiments, when the memory controller circuitry 307 and/or verification circuitry 505 determines there are errors or the dataline is not verifiable, the metadata fetch and caching circuitry 507 fetches the ECC data needed for error correction alone (e.g., ECC 529). One or more of the encryption/decryption circuitry 503, verification circuitry 505, metadata fetch and caching circuitry 507, and memory controller circuitry 307 repairs the dataline 523 using the entirety of the ECC (both portions). Responsive to a successful verification and decryption of the dataline 523, the decrypted data and an indication of an integrity verification are output.

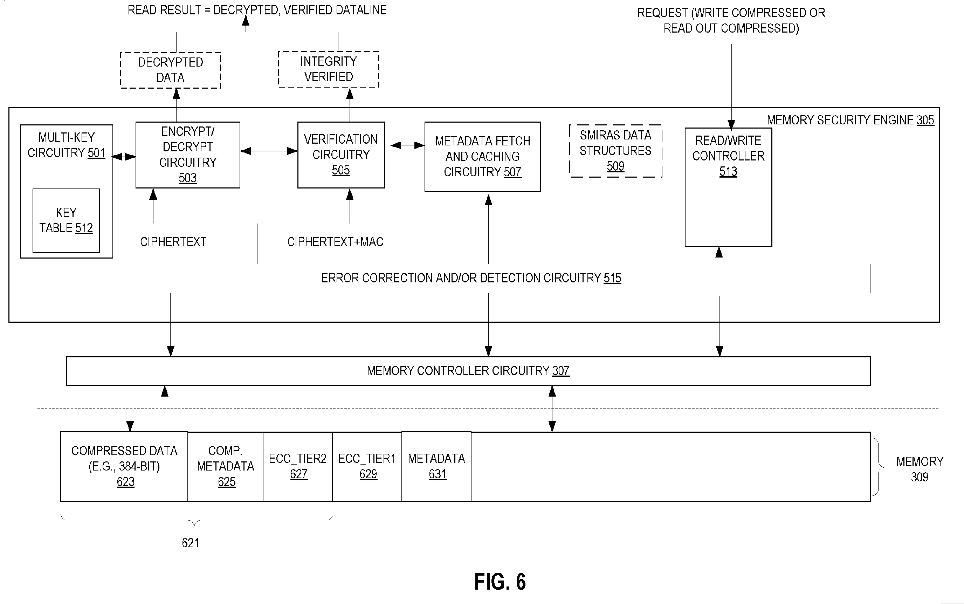

FIG. 6 illustrates embodiments of a memory security engine and its interaction with memory. In particular, using the third layout of FIG. 4. In this example, the compressed data (e.g., 384-bit data) 623, compression metadata 625, and ECC_TIER2 data 627 make up a cacheline of data 621. This is stored in ECC memory. The ECC_TIER1 629 and metadata 631 are not stored as a part of the cacheline.

With the compression option, data is first sent through compression engine. In some embodiments, the compression engine attempts to compress the data by 128 bits at a minimum (the next higher granularity of compression has to be in multiples of 128 bits). This is done to ensure that the compressed data can be encrypted with AES which operates at 128-bot granularity.

With SMIRAS using the third layout, on received a read, the MSE 305 forwards the request to the memory controller 307. The ciphertext along with associated ECC bits (with MAC and ECC_TIER1 bits) is returned to the MSE 305 and fed to the decryption and MAC generation pipeline. The decryption and integrity verification may be done in parallel. On successful verification, the decrypted data is returned back to the requester. Before being fed to the decryption pipeline, the ECC logic 515 checks whether the data loaded has any error. Only if an error is detected, ECC_TIER2 (stored in sequestered memory, shown by blue region in figure 1 above) is fetched to allow error correction along with ECC_TIER1. For a write request, the ECC for data written to memory needs to be generated and stored in memory. Hence, on each write request for data, there are two writes issued to memory, one for the encrypted data itself and another for updating the ECC_TIER2.

To minimize the accesses to memory, in some embodiments, the ECC_TIER2 is cached in an internal metadata cache and only if there is a miss in cache is a request issued to memory for fetching ECC_TIER2 line associated with the data line written to memory. The ECC_TIER2 (64b in size) is updated in the ECC_TIER2 line and the updated line is stored in the metadata cache and naturally written back to memory on eviction.

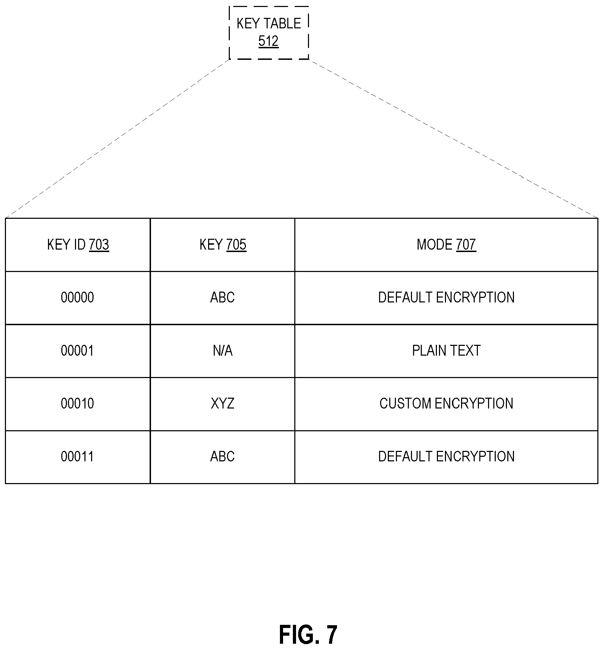

FIG. 7 illustrates embodiments of a key table 512. The entries of the key table 512 may correspond to a different protected domain. For example, each entry includes a key or domain identifier (ID) 703, a protection mode 707, and an associated encryption key 705 (if applicable). In some embodiments, for example, a KeylD may represent the higher order bits of the memory addresses that are within the associated protected domain. The protected domain associated with a given KeylD covers all memory addresses whose highest order bits match the KeylD. In the illustrated embodiment, the KeylD is stored as a field in key table 512, but in alternative embodiments, the KeylD may be used as an index into key table 512 rather than being stored directly in key table 207.

Moreover, in some embodiments, multiple protection modes may be supported, and each protected domain may be protected using a particular protection mode. For example, in some embodiments, the supported protection modes may include plaintext mode (e.g., unencrypted), standard or default encryption mode (e.g., encrypted using a standard or default encryption key), and/or custom encryption mode (e.g., encrypted using a unique encryption key). Accordingly, key table 512may identify the protection mode associated with each protected domain or KeylD.

For example, in the illustrated example, domain key table 512 includes four entries. The first entry identifies a protected domain corresponding to KeylD 00000 (thus covering all memory addresses that contain 00000 in the highest order 5 bits), which is protected in default encryption mode using key "ABC." The second entry identifies a protected domain corresponding to KeylD 00001 (thus covering all memory addresses that contain 00001 in the highest order 5 bits), which is protected in plaintext mode and thus does not have an associated encryption key. The third entry identifies a protected domain corresponding to KeylD 00010 (thus covering all memory addresses that contain 00010 in the highest order 5 bits), which is protected in custom encryption mode using key "XYZ." The fourth entry identifies a protected domain corresponding to KeylD 00011 (thus covering all memory addresses that contain 00011 in the highest order 5 bits), which is protected in default encryption mode using key "ABC." As shown by these examples, the domain protected using custom encryption mode has a unique key ("XYZ"), the domains protected using default encryption mode share an encryption key ("ABC"), and the domain protected in plaintext mode is unencrypted and thus has no associated key.

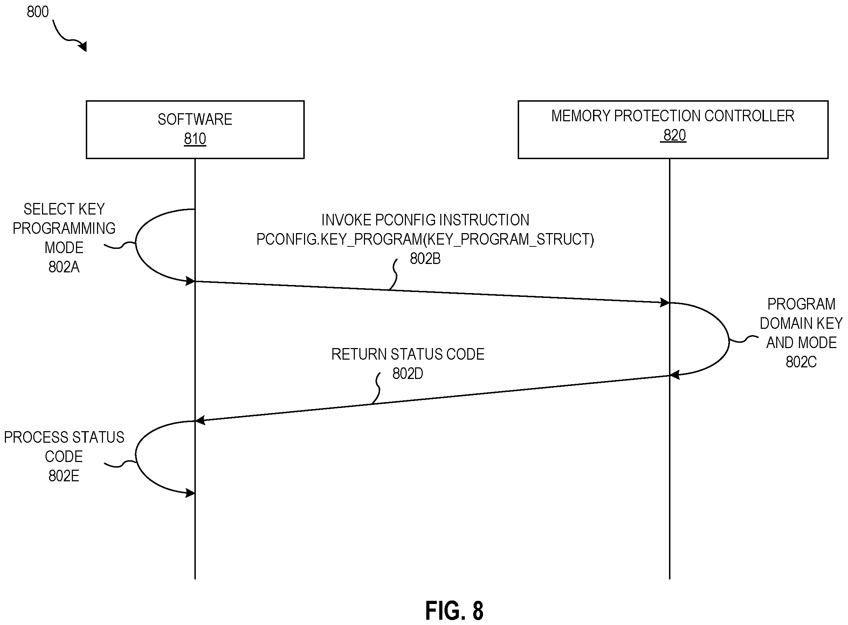

In some embodiments, protected domains may be defined and/or configured using a processor instruction implemented by a processor, such as the "platform configuration" (PCONFIG) instruction described in connection with FIG. 8 and throughout this disclosure. The PCONFIG instruction, for example, may be used to define and/or configure a protected domain by programming a new entry-or modifying an existing entry-in key table 512 of memory security engine 305. In this manner, protected domains can be defined and configured programmatically (e.g., by management software) using the PCONFIG instruction.

In some embodiments, for example, a processor may implement an instruction that can be used to configure the protected domains associated with a memory protection system. For example, the processor instruction could be a "platform configuration" (PCONFIG) instruction, a "trusted platform action supervisor" (TPAS) instruction, and/or any other suitable type of instruction.

A "platform configuration" (PCONFIG) instruction, for example, may be used to define and/or configure a protected domain by programming a new entry-or modifying an existing entry-in a domain key table of a memory protection controller (e.g., a domain key table of a memory encryption engine). In this manner, protected domains can be defined and configured programmatically using the PCONFIG instruction. Once a protected domain has been configured using the PCONFIG instruction, memory addresses associated with the protected domain are protected in the manner specified by the configuration for the protected domain. For example, when using encryption protection, data is encrypted before being written to memory addresses within the protected domain, and data read from memory addresses within the protected domain is decrypted before being returned to the requesting processor.

In some embodiments, the PCONFIG instruction may require a certain privilege level or privilege ring. For example, the processor may support a hierarchy of privilege levels or privilege rings to restrict access to certain resources. In some embodiments, privilege ring 0 may be the least restrictive level, while privilege rings with higher numbers may be increasingly more restrictive. For example, privilege ring 0 may be used for system management software (e.g., the operating system kernel and device drivers), while privilege ring 3 may be used for userland applications. Accordingly, in some embodiments, the PCONFIG instruction may be a ring-0 instruction that can only be used by software executing in the highest privilege ring (e.g., management software used to configure protected domains). Alternatively, or additionally, the PCONFIG instruction may be a ring-3 instruction that can be used by any userland application to configure its own protected domain.

FIG. 8 illustrates an example call flow associated with the PCONFIG instruction. The illustrated example identifies the call flow between software 810 performing domain configuration using the PCONFIG instruction and a memory security engine 305. Memory security engine 305 may include any engine, controller, or other component that provides cryptographic memory protection. Software 810 may include any software used to configure the domains protected by memory security engine 305, such as a virtual machine manager and/or other management software. The illustrated call flow begins by software 810 selecting a key programming mode for programming an encryption key for a particular domain (call 802a). For example, as discussed further below, software 810 may directly specify a key for the domain, or may request that a random key be generated. Software 810 may then invoke the PCONFIG processor instruction to perform the domain configuration (call 802b). When the PCONFIG instruction is invoked, memory security engine 305 programs the key and protection mode for the particular domain (call 802c). Memory security engine 305 then returns a status code to software 810 (call 802d), and the status code is then processed by software 810 (call 802e).

In some embodiments, the PCONFIG instruction may support various leaf functions for configuring and managing protected domains. When the PCONFIG instruction is executed, for example, the particular leaf function to invoke may be specified in a hardware register (e.g., the EAX register). In some embodiments, the parameters used by a particular leaf function may also be specified in hardware registers (e.g., the RBX/RCX/RDX registers).

The table below illustrates an example of PCONFIG leaf encodings that could be used to enable support for multiple leaf functions. Although only one leaf function is defined (the KEY_PROGRAM leaf), additional leaf functions can be defined using the reserved leaf encodings in order to extend the functionality of the PCONFIG instruction.

**PCONFIG Leaf Function Encodings**

| LEAF | ENCODING | DESCRIPTION |
|---|---|---|
| KEY_PROGRAM | 0x00000000 | This leaf function is used to program the key associated with a domain. |
| OTHER | 0x00000001-0xFFFFFFFF | Additional leaf functions can be defined using these reserved leaf encodings for future extensions to the functionality of the PCONFIG instruction. |

The key program leaf function (KEY_PROGRAM) of the PCONFIG instruction can be used to program a key for a protected domain. In some embodiments, the parameters used by the key program leaf function may be specified in a key program structure (KEY_PROGRAM_STRUCT), and the address of the key program structure may be specified in a hardware register (e.g., the RBX register). The table below illustrates an example embodiment of the key program structure (KEY_PROGRAM_STRUCT).

**Key Program Structure (KEY_PROGRAM_STRUCT)**

| FIELD | SIZE (bytes) | DESCRIPTION |
|---|---|---|
| KEYID | 1 | This field identifies the KeylD of a domain that is being programmed. |
| KEYID_CMD | 1 | This field identifies a key programming command. |
| KEYID_ENC_ALG | 2 | This field may be used to select an encryption algorithm to use for the domain (based on the available encryption algorithms). |
| KEYID_KEY | 16 | This field may identify an encryption key for the domain. |
| KEYID_TWEAK_KEY | 16 | This field may identify a tweak key value. |

As shown in the table above, the key program structure identifies the KeylD of the particular domain being programmed, and it also specifies a key programming command. In some embodiments, for example, the key program leaf function may support multiple key programming commands, and the desired command may be specified in the key program structure. Moreover, in some embodiments, the key program structure may also include reserved field(s) that can be used for subsequent extensions to the key program leaf function.

The table below illustrates examples of key programming commands that may be supported by the key program leaf function.

**Key Programming Commands**

| KEY DOMAIN (KD) COMMAND | ENCODING | DESCRIPTION |
|---|---|---|
| Set Key Direct (KD_SET_KEY_DIRECT) | 0 | This command sets the key for a domain directly using the key specified in the key program structure (KEY_PROGRAM_STRUCT). The key is provided by the software that initiates this key programming command. |
| | | The domain is then protected in custom encryption mode. |
| Set Key Random (KD_SET_KEY_RANDOM) | 1 | This command sets the key for a domain using a randomly generated key. |
| | | For example, a key may be randomly generated by a processor and/or a random number generator, and thus may not be known by (or shared with) the software that initiates the key programming command. |
| | | The domain is then protected in custom encryption mode. |
| Clear Key (KD_CLEAR_KEY) | 2 | This command clears the key that was previously set for a domain. |
| | | The domain is then protected in default encryption mode. |
| No Key (KD_NO_KEY) | 3 | This command disables memory encryption for a domain. |
| | | The domain is then protected in plaintext mode. |

After the key program leaf function is executed, a return value or status code may be specified in a hardware register to indicate whether the key program function was successful. The table below illustrates examples of the status codes that may be returned by the key program leaf function.

**Status codes returned by key program leaf function (KEY_PROGRAM)**

| STATUS CODE | ENCODING | DESCRIPTION |
|---|---|---|
| PROG_SUCCESS | 0 | The domain is programmed successfully. |
| INVALID_PROG_CMD | 1 | The key programming command is invalid. |
| ENTROPY_ERROR | 2 | The entropy of a randomly generated key is insufficient. |
| INVALID_KEYID | 3 | The domain KeylD is invalid. |
| INVALID_ENC_ALG | 4 | An invalid encryption algorithm is selected. |
| DEVICE_BUSY | 5 | A lock for the domain key table cannot be obtained. |

While the illustrated embodiment uses the PCONFIG processor instruction to perform domain configuration, other embodiments may use alternative and/or additional approaches for domain configuration. For example, in some embodiments, domain configuration may be performed using hardware registers. For example, a PCONFIG model-specific register (MSR) may be implemented for performing domain configuration, allowing software to invoke the PCONFIG operation by writing to the PCONFIG MSR (e.g., executing a WRMSR instruction with the index for the PCONFIG MSR passed in a register, such as the ECX register). Moreover, certain parameters for the PCONFIG operation (and its associated leaf functions and commands) may be passed in hardware registers. For example, the address of the key program structure (KEY_PROGRAM_STRUCT) can be passed in a hardware register, such as the EDX register, EAX register, or both of those registers (e.g., for 64-bit memory addresses). The PCONFIG operation can then be performed in a similar manner as described above.

Moreover, in some embodiments, a PCONFIG operation may utilize wrapped blobs for domain key programming. In this manner, domain keys can be programmed without revealing the keys to management software. In some embodiments, for example, additional PCONFIG leaf functions may be implemented to enable keys to be wrapped and then subsequently programmed to memory security engine 305 after being unwrapped.

Example pseudocode for implementing the PCONFIG instruction is provided below:

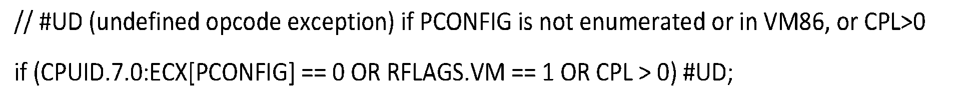

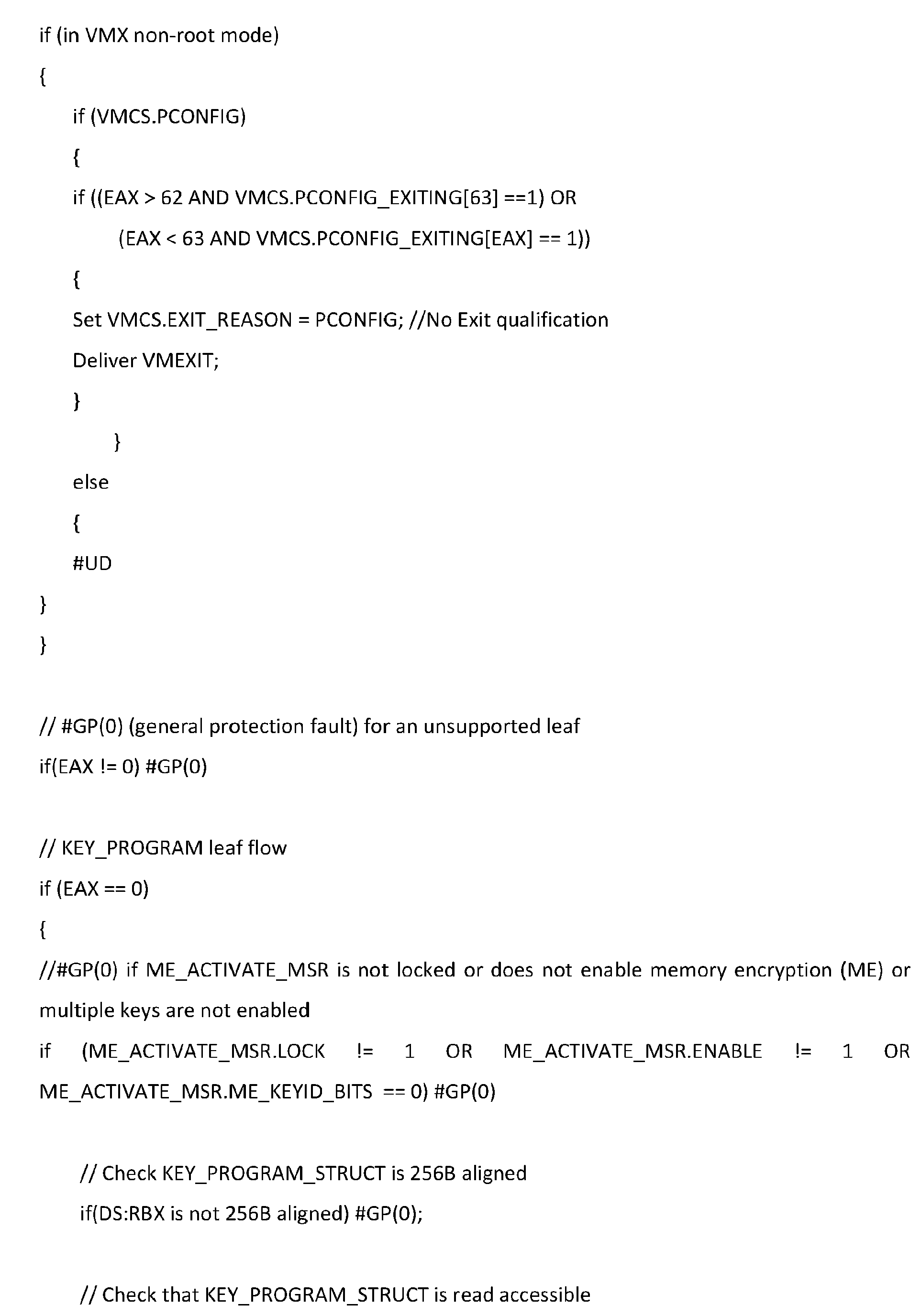

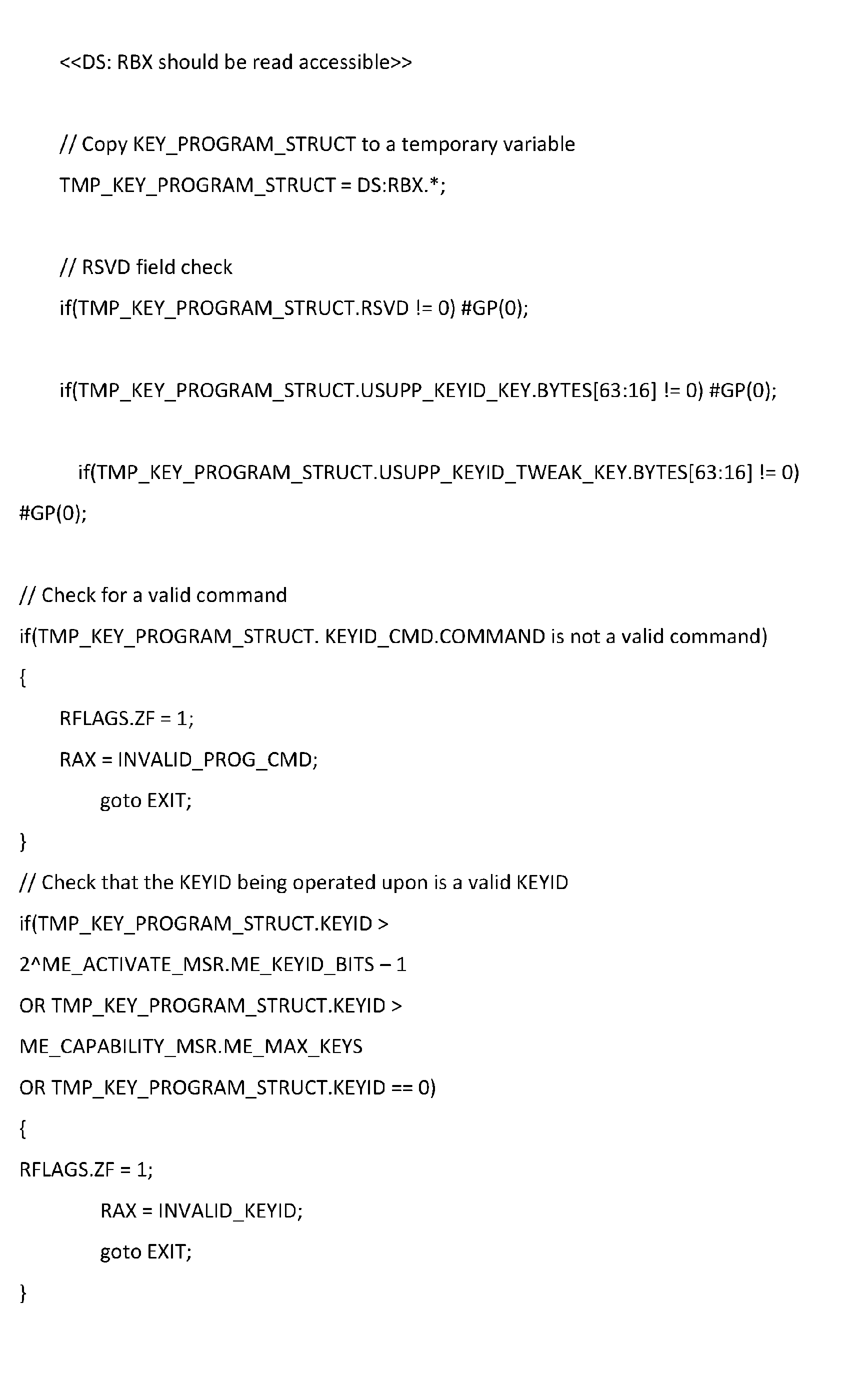

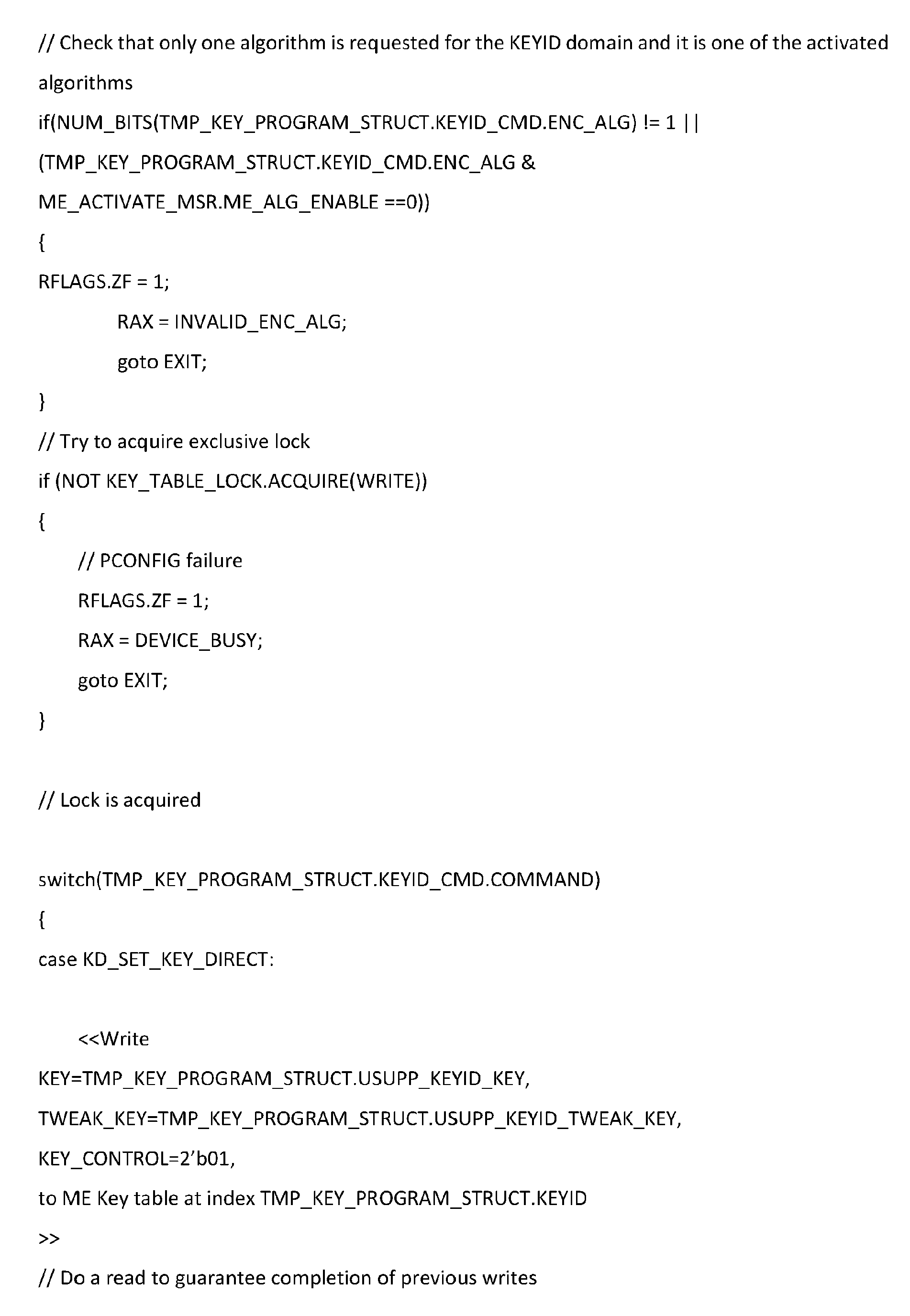

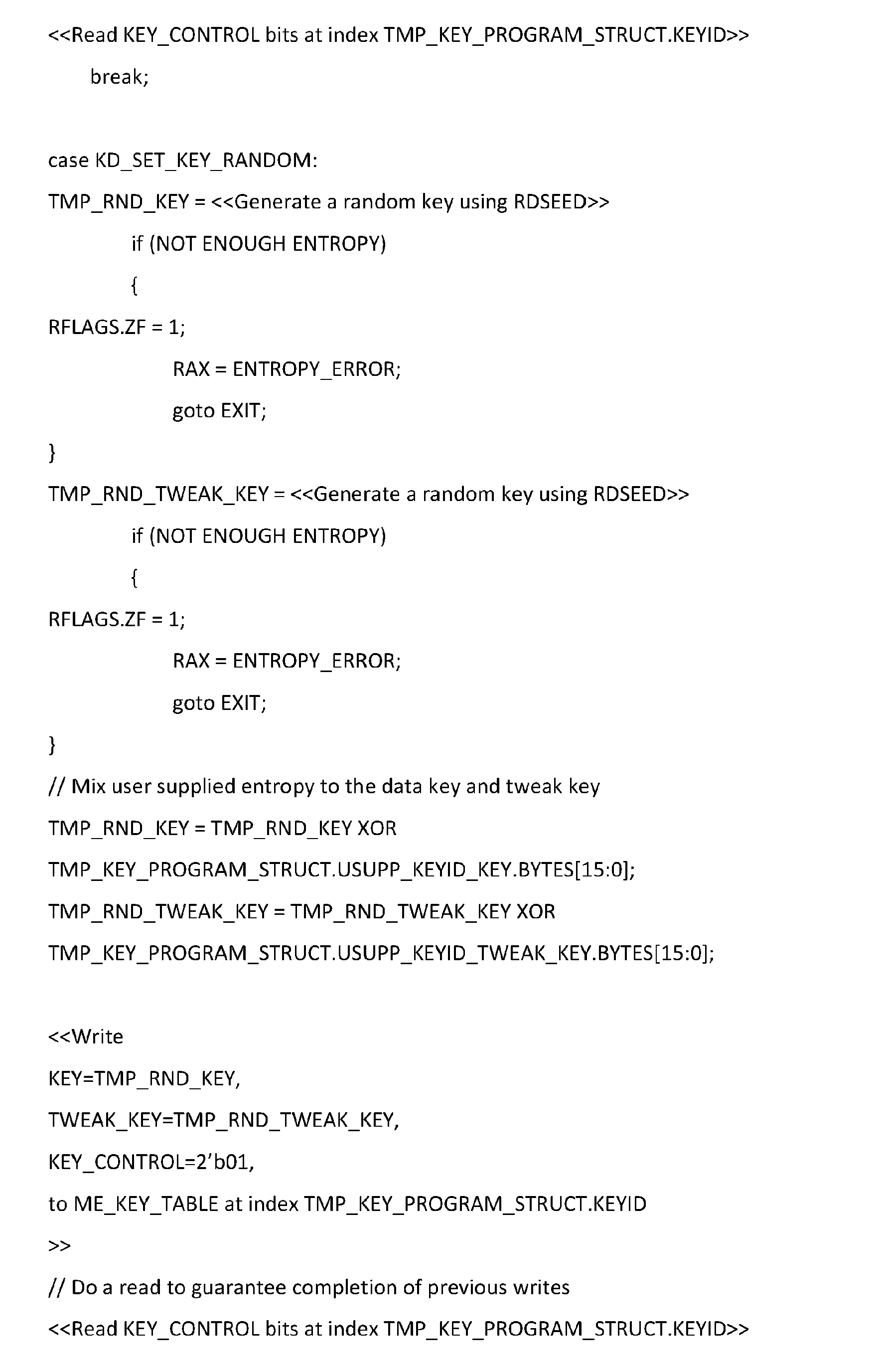

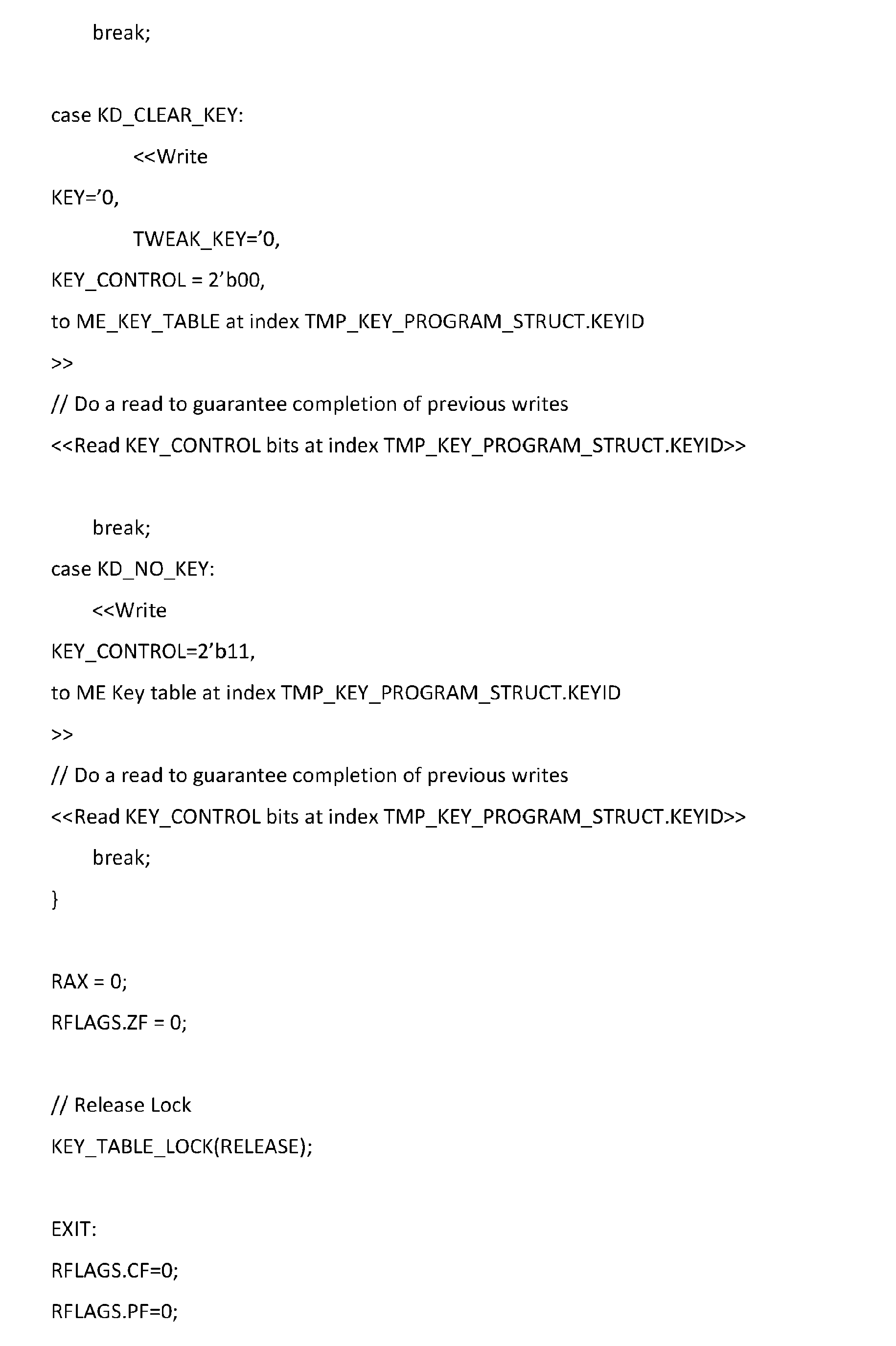

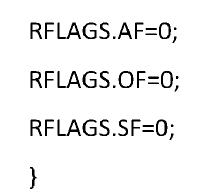

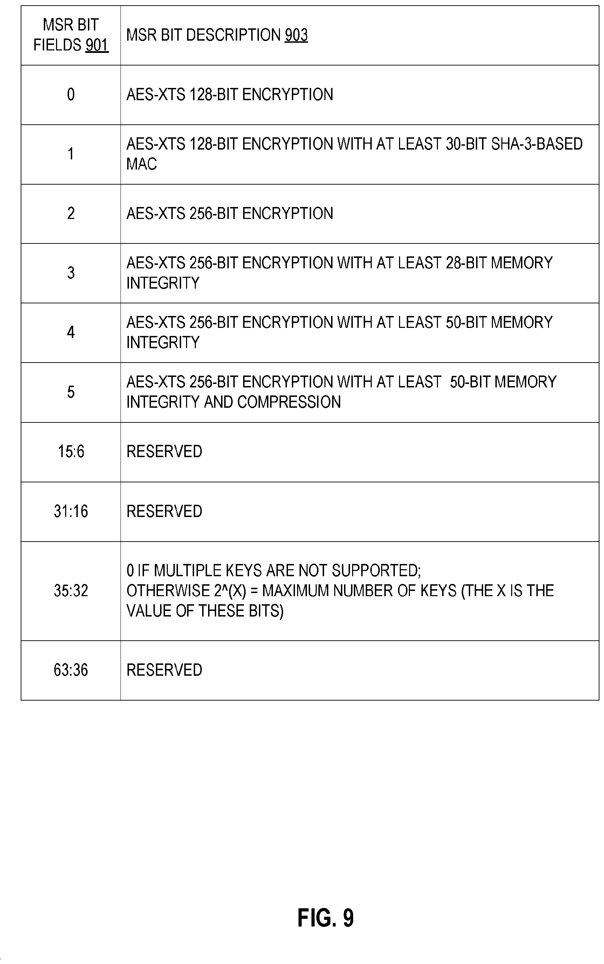

As noted above, SMIRAS capability may be exposed to the BIOS/software via MSRs. FIG. 9 illustrates embodiments of a model specific register (MSR) detailing memory encryption capability. In some embodiments, this register is IA32_TME_CAPABILITY. This illustration shows MSR bit fields 901 and their corresponding description 903. Note that fields may be rearranged, etc. as this is merely an exemplary MSR layout.

The first six fields indicate what encryption and MAC the MSE(s) are to use by the encryption/decryption circuitry 503 and verification circuitry 'iNVC05. Note that bit 5 is used to indicate usage of compression. Bits 35:32 identify the key(s) (e.g., from multi-key circuitry 501).

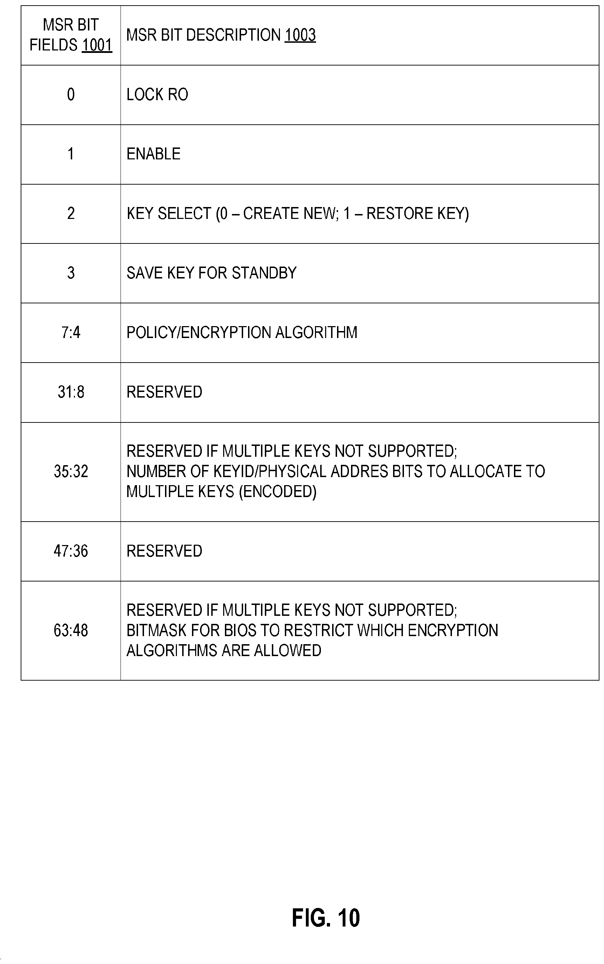

FIG. 10 illustrates embodiments of a model specific register (MSR) detailing memory activation. In some embodiments, this register is ME_ACTIVATE which is used, at least in part, to lock MSRs. This illustration shows MSR bit fields 1001 and their corresponding description 1003. Note that fields may be rearranged, etc. as this is merely an exemplary MSR layout.

Bit 0 indicates a read-only lock on MSE MSRs after memory encryption has been activated. For example, the lock may be activated after memory encryption has been activated through a write to the ACTIVATE_MSR register (e.g., using a write MSR or WRMSR instruction). The lock can be enabled by setting this bit field to 1, and the lock can be disabled by setting this bit field to 0.

Bit 1, when set, enables memory encryption (which may be total memory encryption). Bit 2 is used to select a key for a default mode. Either create a new key at boot (when 0) or restore a key (when 1).

Bit 3 indicates to save the key into storage when resuming from standby.

Bits 7:4 indicate the encryption algorithm that is to be used. The value aligns with the first six fields of the MSR of FIG. 9.

Bits 10:8 are used for SMKTME.

Bit 11 indicates that SMIRAS is enabled (in some embodiments). Bits 13:12 indicate SMIRAS granularity.

Bits 31:14 are reserved.

Bits 35:32 indicate the number of keys to support. For example, if this has a value of 8 then up to 256 keys would be supported.

Bits 47:36 are reserved.

Bits 63:48 act as a bitmask for BIOS to restrict which encryption algorithms are allowed.

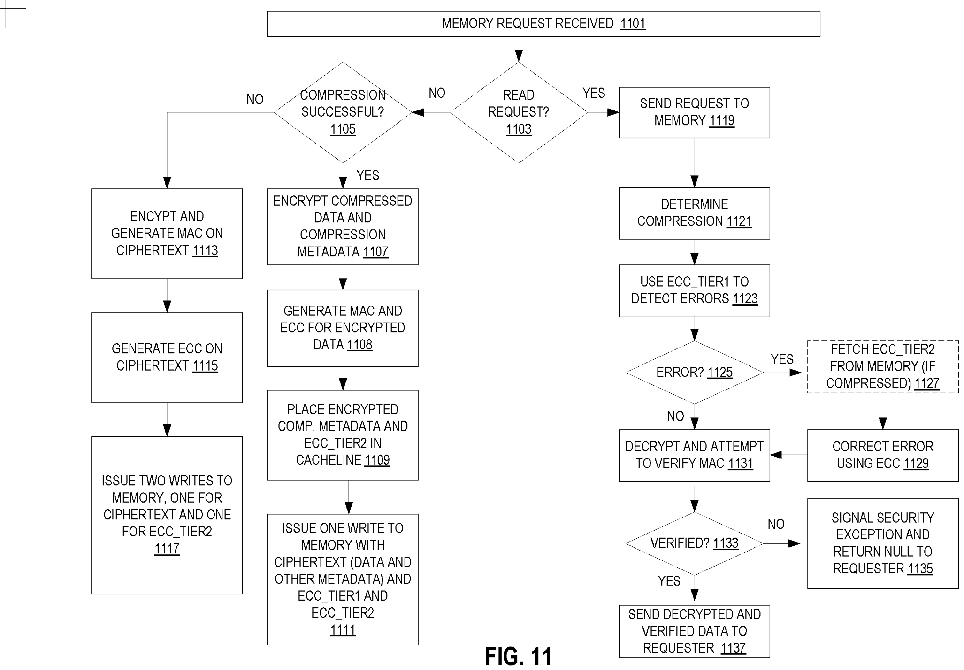

FIG. 11 illustrates embodiments of a flow for handing memory requests when using compressed SMIRAS and/or uncompressed SMIRAS. In some embodiments, by this point the data to write has been compressed (or at least attempted to be compressed). In some embodiments, acts of this flow are performed by one or more of the MSE 305 and the memory controller 307.

At 1101, a memory request is received. A determination of the type of request, read or write, is made at 1103. In some embodiments, the read/write controller 513 makes this determination. For a write request, a determination of if the compression was successful at 1105. For example, was the data successfully compressed? When the compression was successful, then the compressed data and compression metadata are encrypted using encryption/decryption circuitry 503. For example, the compressed data is encrypted using AES and the compression metadata is encrypted using a narrow block cipher.

A MAC is generated over the encrypted line and compression metadata using verification circuitry 505 and ECC is generated over the encrypted line and compression metadata using error correction and/or detection circuitry 515 at 1108. Note the generated ECC includes both ECC_TIER1 and ECC_TIER2.

The encrypted cacheline along with ECC_TIER2 is placed in the cacheline itself at 1109 and the encrypted data along with its ECC (which contains the MAC and compression status at a minimum) is stored in memory with one write request at 1111. In other words, the layout of 420 is used.

If, on the other hand compression is not successful, the cacheline is encrypted and a MAC generated on the encrypted line at 1113. ECC is generated on the ciphertext of the dataline alone in this case at 1115 and two writes are issued to memory to store the encrypted ciphertext and the ECC_TIER2 associated with the cacheline in sequestered memory at 1117. In other words, the layout of 410 is used.

For a read request, the read request is sent to memory at 1119 and on read data return, the compression status is checked to determine if the cacheline is compressed or not at 1121. ECC_TIER1 is used to detect any errors at 1123.

If no error is detected at 1125, the MAC is attempted to be verified (e.g., by comparing to a computed MAC on the encrypted data and encrypted compression metadata) at 1131. When the line is compressed, the MAC verified is over the compressed data and compression metadata.

A determination of the verification is made at 1133. When the MAC verification fails, a security exception is signaled at 1135. If the MAC verification is successful, the decrypted data is returned to the requester at 1137. If the line was compressed, the decrypted data is first decompressed using the compression metadata before returning data to the requester.

When there is an error detected at 1125, ECC_TIER2 is fetched when the line was compressed at 1127. Note that if the line was compressed the ECC_TIER2 would be in the cacheline fetched itself and thereby requiring no additional accesses to memory. The error is corrected at 1129 and the flow to verify integrity is followed on the corrected data at 1131.

SMIRAS may be utilized in many different architectures and systems. Detailed below are examples of exemplary architectures, systems, processors, etc.

### Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

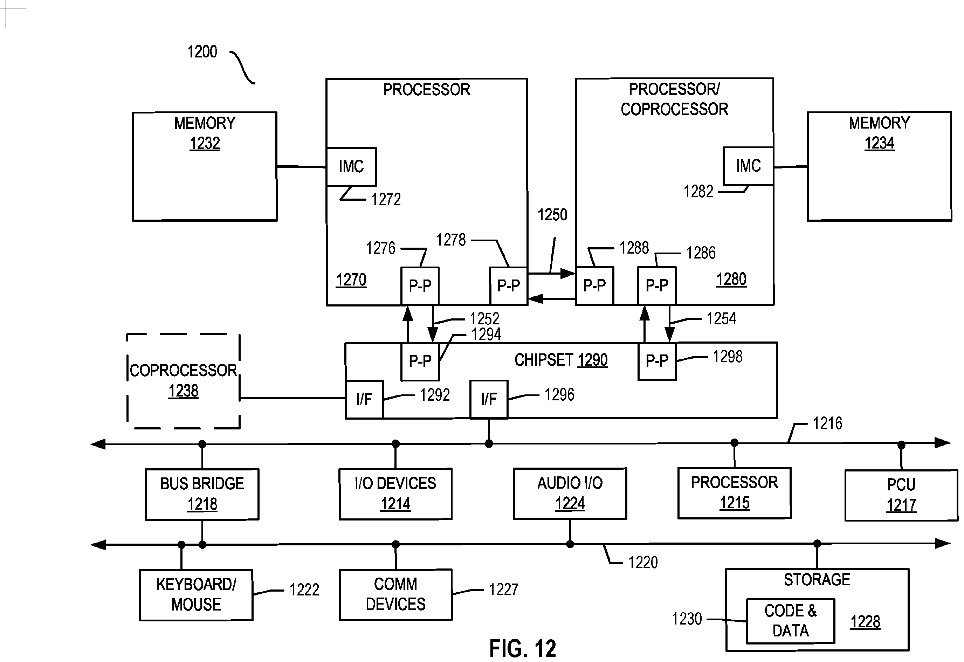

FIG. 12 illustrates embodiments of an exemplary system. Multiprocessor system 1200 is a point-to-point interconnect system and includes a plurality of processors including a first processor 1270 and a second processor 1280 coupled via a point-to-point interconnect 1250. In some embodiments, the first processor 1270 and the second processor 1280 are homogeneous. In some embodiments, first processor 1270 and the second processor 1280 are heterogenous.

Processors 1270 and 1280 are shown including integrated memory controller (IMC) units circuitry 1272 and 1282, respectively. Processor 1270 also includes as part of its interconnect controller units point-to-point (P-P) interfaces 1276 and 1278; similarly, second processor 1280 includes P-P interfaces 1286 and 1288. Processors 1270, 1280 may exchange information via the point-to-point (P-P) interconnect 1250 using P-P interface circuits 1278, 1288. IMCs 1272 and 1282 couple the processors 1270, 1280 to respective memories, namely a memory 1232 and a memory 1234, which may be portions of main memory locally attached to the respective processors.

Processors 1270, 1280 may each exchange information with a chipset 1290 via individual P-P interconnects 1252, 1254 using point to point interface circuits 1276, 1294, 1286, 1298. Chipset 1290 may optionally exchange information with a coprocessor 1238 via a high-performance interface 1292. In some embodiments, the coprocessor 1238 is a special-purpose processor, such as, for example, a high-throughput MIC processor, a network or communication processor, compression engine, graphics processor, GPGPU, embedded processor, or the like.

A shared cache (not shown) may be included in either processor 1270, 1280 or outside of both processors, yet connected with the processors via P-P interconnect, such that either or both processors' local cache information may be stored in the shared cache if a processor is placed into a low power mode.

Chipset 1290 may be coupled to a first interconnect 1216 via an interface 1296. In some embodiments, first interconnect 1216 may be a Peripheral Component Interconnect (PCI) interconnect, or an interconnect such as a PCI Express interconnect or another I/O interconnect. In some embodiments, one of the interconnects couples to a power control unit (PCU) 1217, which may include circuitry, software, and/or firmware to perform power management operations with regard to the processors 1270, 1280 and/or co-processor 1238. PCU 1217 provides control information to a voltage regulator to cause the voltage regulator to generate the appropriate regulated voltage. PCU 1217 also provides control information to control the operating voltage generated. In various embodiments, PCU 1217 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1217 is illustrated as being present as logic separate from the processor 1270 and/or processor 1280. In other cases, PCU 1217 may execute on a given one or more of cores (not shown) of processor 1270 or 1280. In some cases, PCU 1217 may be implemented as a microcontroller (dedicated or general-purpose) or other control logic configured to execute its own dedicated power management code, sometimes referred to as P-code. In yet other embodiments, power management operations to be performed by PCU 1217 may be implemented externally to a processor, such as by way of a separate power management integrated circuit (PMIC) or another component external to the processor. In yet other embodiments, power management operations to be performed by PCU 1217 may be implemented within BIOS or other system software.

Various I/O devices 1214 may be coupled to first interconnect 1216, along with an interconnect (bus) bridge 1218 which couples first interconnect 1216 to a second interconnect 1220. In some embodiments, one or more additional processor(s) 1215, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 1216. In some embodiments, second interconnect 1220 may be a low pin count (LPC) interconnect. Various devices may be coupled to second interconnect 1220 including, for example, a keyboard and/or mouse 1222, communication devices 1227 and a storage unit circuitry 1228. Storage unit circuitry 1228 may be a disk drive or other mass storage device which may include instructions/code and data 1230, in some embodiments. Further, an audio I/O 1224 may be coupled to second interconnect 1220. Note that other architectures than the point-to-point architecture described above are possible. For example, instead of the point-to-point architecture, a system such as multiprocessor system 1200 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

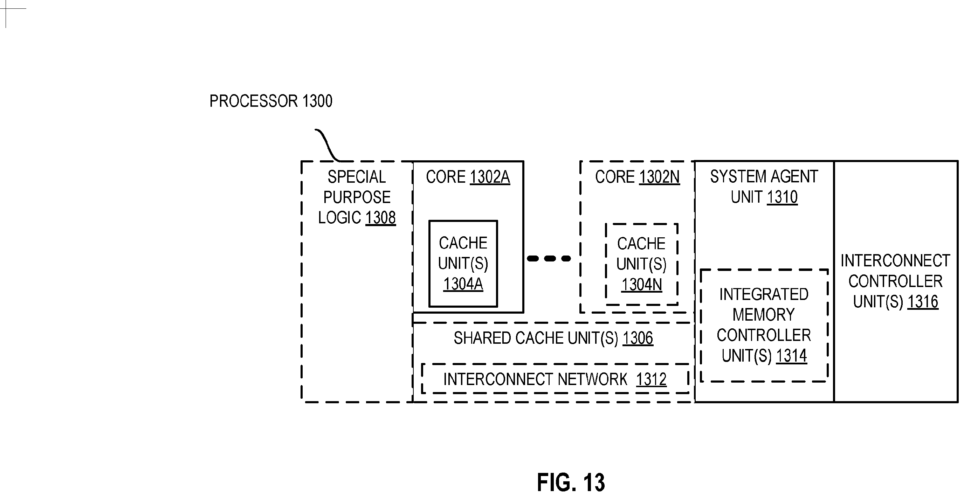

FIG. 13 illustrates a block diagram of embodiments of a processor 1300 that may have more than one core, may have an integrated memory controller, and may have integrated graphics. The solid lined boxes illustrate a processor 1300 with a single core 1302A, a system agent 1310, a set of one or more interconnect controller units circuitry 1316, while the optional addition of the dashed lined boxes illustrates an alternative processor 1300 with multiple cores 1302(A)-(N), a set of one or more integrated memory controller unit(s) circuitry 1314 in the system agent unit circuitry 1310, and special purpose logic 1308, as well as a set of one or more interconnect controller units circuitry 1316. Note that the processor 1300 may be one of the processors 1270 or 1280, or co-processor 1238 or 1215 of FIG. 12.

Thus, different implementations of the processor 1300 may include: 1) a CPU with the special purpose logic 1308 being integrated graphics and/or scientific (throughput) logic (which may include one or more cores, not shown), and the cores 1302(A)-(N) being one or more general purpose cores (e.g., general purpose in-order cores, general purpose out-of-order cores, or a combination of the two); 2) a coprocessor with the cores 1302(A)-(N) being a large number of special purpose cores intended primarily for graphics and/or scientific (throughput); and 3) a coprocessor with the cores 1302(A)-(N) being a large number of general purpose in-order cores. Thus, the processor 1300 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 1300 may be a part of and/or may be implemented on one or more substrates using any of a number of process technologies, such as, for example, BiCMOS, CMOS, or NMOS.

A memory hierarchy includes one or more levels of cache unit(s) circuitry 1304(A)-(N) within the cores 1302(A)-(N), a set of one or more shared cache units circuitry 1306, and external memory (not shown) coupled to the set of integrated memory controller units circuitry 1314. The set of one or more shared cache units circuitry 1306 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 1312 interconnects the special purpose logic 1308 (e.g., integrated graphics logic), the set of shared cache units circuitry 1306, and the system agent unit circuitry 1310, alternative embodiments use any number of well-known techniques for interconnecting such units. In some embodiments, coherency is maintained between one or more of the shared cache units circuitry 1306 and cores 1302(A)-(N).

In some embodiments, one or more of the cores 1302(A)-(N) are capable of multi-threading. The system agent unit circuitry 1310 includes those components coordinating and operating cores 1302(A)-(N). The system agent unit circuitry 1310 may include, for example, power control unit (PCU) circuitry and/or display unit circuitry (not shown). The PCU may be or may include logic and components needed for regulating the power state of the cores 1302(A)-(N) and/or the special purpose logic 1308 (e.g., integrated graphics logic). The display unit circuitry is for driving one or more externally connected displays.

The cores 1302(A)-(N) may be homogenous or heterogeneous in terms of architecture instruction set; that is, two or more of the cores 1302(A)-(N) may be capable of executing the same instruction set, while other cores may be capable of executing only a subset of that instruction set or a different instruction set.

### Exemplary Core Architectures

### In-order and out-of-order core block diagram

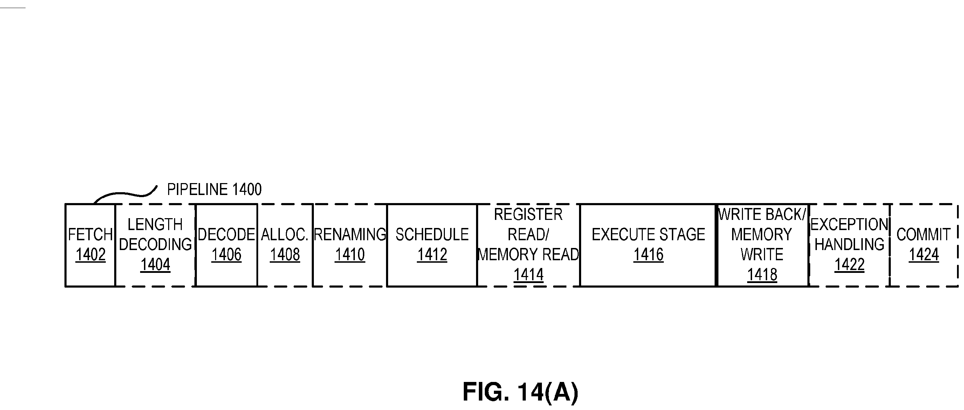

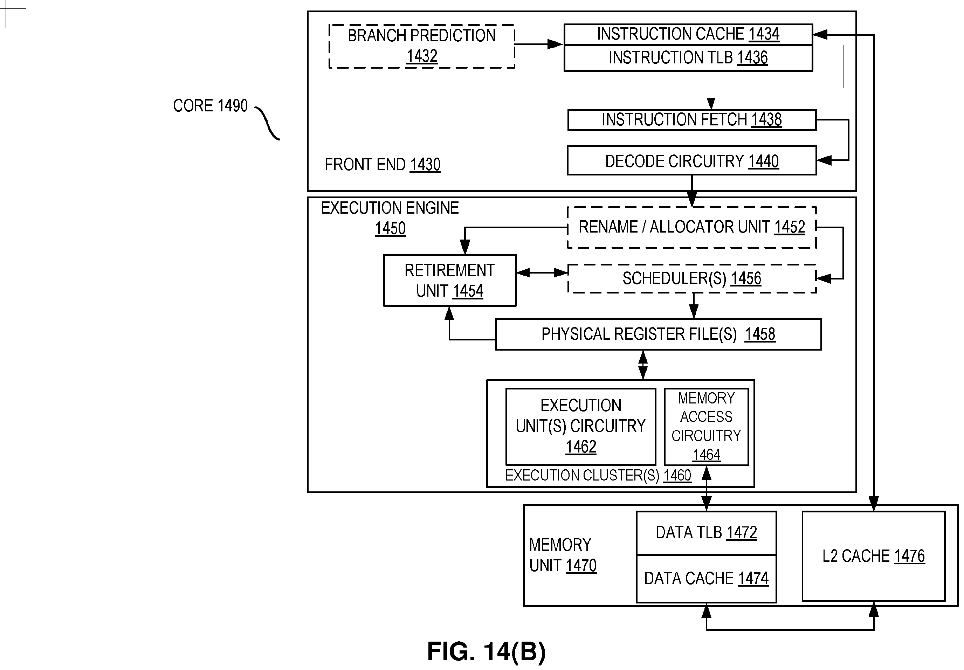

FIG. 14(A) is a block diagram illustrating both an exemplary in-order pipeline and an exemplary register renaming, out-of-order issue/execution pipeline according to embodiments of the invention. FIG. 14(B) is a block diagram illustrating both an exemplary embodiment of an in-order architecture core and an exemplary register renaming, out-of-order issue/execution architecture core to be included in a processor according to embodiments of the invention. The solid lined boxes in FIGS. 14(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 14(A), a processor pipeline 1400 includes a fetch stage 1402, an optional length decode stage 1404, a decode stage 1406, an optional allocation stage 1408, an optional renaming stage 1410, a scheduling (also known as a dispatch or issue) stage 1412, an optional register read/memory read stage 1414, an execute stage 1416, a write back/memory write stage 1418, an optional exception handling stage 1422, and an optional commit stage 1424. One or more operations can be performed in each of these processor pipeline stages. For example, during the fetch stage 1402, one or more instructions are fetched from instruction memory, during the decode stage 1406, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 1406 and the register read/memory read stage 1414 may be combined into one pipeline stage. In one embodiment, during the execute stage 1416, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 1400 as follows: 1) the instruction fetch 1438 performs the fetch and length decoding stages 1402 and 1404; 2) the decode unit circuitry 1440 performs the decode stage 1406; 3) the rename/allocator unit circuitry 1452 performs the allocation stage 1408 and renaming stage 1410; 4) the scheduler unit(s) circuitry 1456 performs the schedule stage 1412; 5) the physical register file(s) unit(s) circuitry 1458 and the memory unit circuitry 1470 perform the register read/memory read stage 1414; the execution cluster 1460 perform the execute stage 1416; 6) the memory unit circuitry 1470 and the physical register file(s) unit(s) circuitry 1458 perform the write back/memory write stage 1418; 7) various units (unit circuitry) may be involved in the exception handling stage 1422; and 8) the retirement unit circuitry 1454 and the physical register file(s) unit(s) circuitry 1458 perform the commit stage 1424.

FIG. 14(B) shows processor core 1490 including front-end unit circuitry 1430 coupled to an execution engine unit circuitry 1450, and both are coupled to a memory unit circuitry 1470. The core 1490 may be a reduced instruction set computing (RISC) core, a complex instruction set computing (CISC) core, a very long instruction word (VLIW) core, or a hybrid or alternative core type. As yet another option, the core 1490 may be a special-purpose core, such as, for example, a network or communication core, compression engine, coprocessor core, general purpose computing graphics processing unit (GPGPU) core, graphics core, or the like.

The front end unit circuitry 1430 may include branch prediction unit circuitry 1432 coupled to an instruction cache unit circuitry 1434, which is coupled to an instruction translation lookaside buffer (TLB) 1436, which is coupled to instruction fetch unit circuitry 1438, which is coupled to decode unit circuitry 1440. In one embodiment, the instruction cache unit circuitry 1434 is included in the memory unit circuitry 1470 rather than the front-end unit circuitry 1430. The decode unit circuitry 1440 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 1440 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 1440 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1490 includes a microcode ROM (not shown) or other medium that stores microcode for certain macroinstructions (e.g., in decode unit circuitry 1440 or otherwise within the front end unit circuitry 1430). In one embodiment, the decode unit circuitry 1440 includes a micro-operation (micro-op) or operation cache (not shown) to hold/cache decoded operations, micro-tags, or micro-operations generated during the decode or other stages of the processor pipeline 1400. The decode unit circuitry 1440 may be coupled to rename/allocator unit circuitry 1452 in the execution engine unit circuitry 1450.

The execution engine circuitry 1450 includes the rename/allocator unit circuitry 1452 coupled to a retirement unit circuitry 1454 and a set of one or more scheduler(s) circuitry 1456. The scheduler(s) circuitry 1456 represents any number of different schedulers, including reservations stations, central instruction window, etc. In some embodiments, the scheduler(s) circuitry 1456 can include arithmetic logic unit (ALU) scheduler/scheduling circuitry, ALU queues, arithmetic generation unit (AGU) scheduler/scheduling circuitry, AGU queues, etc. The scheduler(s) circuitry 1456 is coupled to the physical register file(s) circuitry 1458. Each of the physical register file(s) circuitry 1458 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 1458 includes vector registers unit circuitry, writemask registers unit circuitry, and scalar register unit circuitry. These register units may provide architectural vector registers, vector mask registers, general-purpose registers, etc. The physical register file(s) unit(s) circuitry 1458 is overlapped by the retirement unit circuitry 1454 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1454 and the physical register file(s) circuitry 1458 are coupled to the execution cluster(s) 1460. The execution cluster(s) 1460 includes a set of one or more execution units circuitry 1462 and a set of one or more memory access circuitry 1464. The execution units circuitry 1462 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 1456, physical register file(s) unit(s) circuitry 1458, and execution cluster(s) 1460 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 1464). It should also be understood that where separate pipelines are used, one or more of these pipelines may be out-of-order issue/execution and the rest in-order.

In some embodiments, the execution engine unit circuitry 1450 may perform load store unit (LSU) address/data pipelining to an Advanced Microcontroller Bus (AHB) interface (not shown), and address phase and writeback, data phase load, store, and branches.

The set of memory access circuitry 1464 is coupled to the memory unit circuitry 1470, which includes data TLB unit circuitry 1472 coupled to a data cache circuitry 1474 coupled to a level 2 (L2) cache circuitry 1476. In one exemplary embodiment, the memory access units circuitry 1464 may include a load unit circuitry, a store address unit circuit, and a store data unit circuitry, each of which is coupled to the data TLB circuitry 1472 in the memory unit circuitry 1470. The instruction cache circuitry 1434 is further coupled to a level 2 (L2) cache unit circuitry 1476 in the memory unit circuitry 1470. In one embodiment, the instruction cache 1434 and the data cache 1474 are combined into a single instruction and data cache (not shown) in L2 cache unit circuitry 1476, a level 3 (L3) cache unit circuitry (not shown), and/or main memory. The L2 cache unit circuitry 1476 is coupled to one or more other levels of cache and eventually to a main memory.

The core 1490 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 1490 includes logic to support a packed data instruction set extension (e.g., AVX1, AVX2), thereby allowing the operations used by many multimedia applications to be performed using packed data.

### Exemplary Execution Unit(s) Circuitry

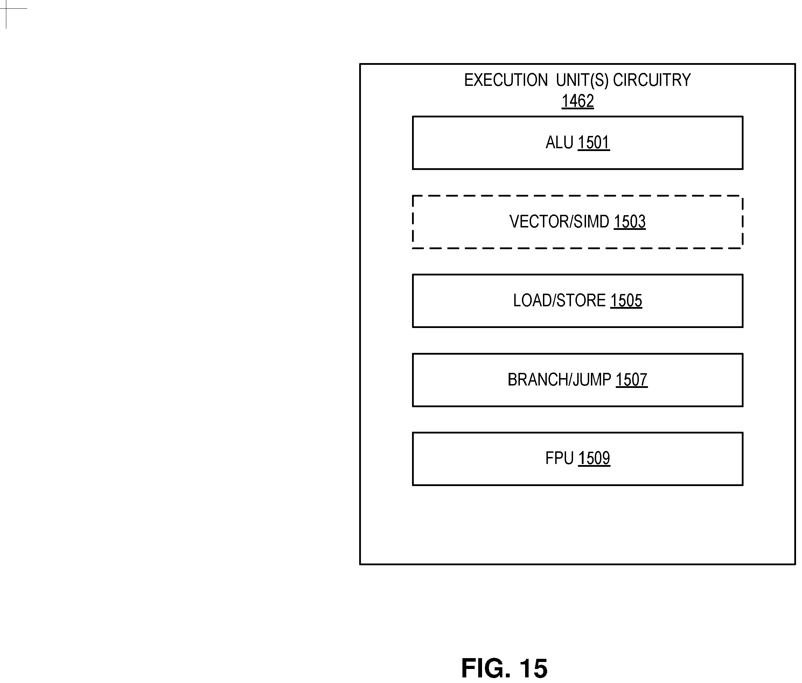

FIG. 15 illustrates embodiments of execution unit(s) circuitry, such as execution unit(s) circuitry 1462 of FIG. 14(B). As illustrated, execution unit(s) circuity 1462 may include one or more ALU circuits 1501, vector/SIMD unit circuits 1503, load/store unit circuits 1505, and/or branch/jump unit circuits 1507. ALU circuits 1501 perform integer arithmetic and/or Boolean operations. Vector/SIMD unit circuits 1503 perform vector/SIMD operations on packed data (such as SIMD/vector registers). Load/store unit circuits 1505 execute load and store instructions to load data from memory into registers or store from registers to memory. Load/store unit circuits 1505 may also generate addresses. Branch/jump unit circuits 1507 cause a branch or jump to a memory address depending on the instruction. Floating-point unit (FPU) circuits 1509 perform floating-point arithmetic. The width of the execution unit(s) circuitry 1462 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

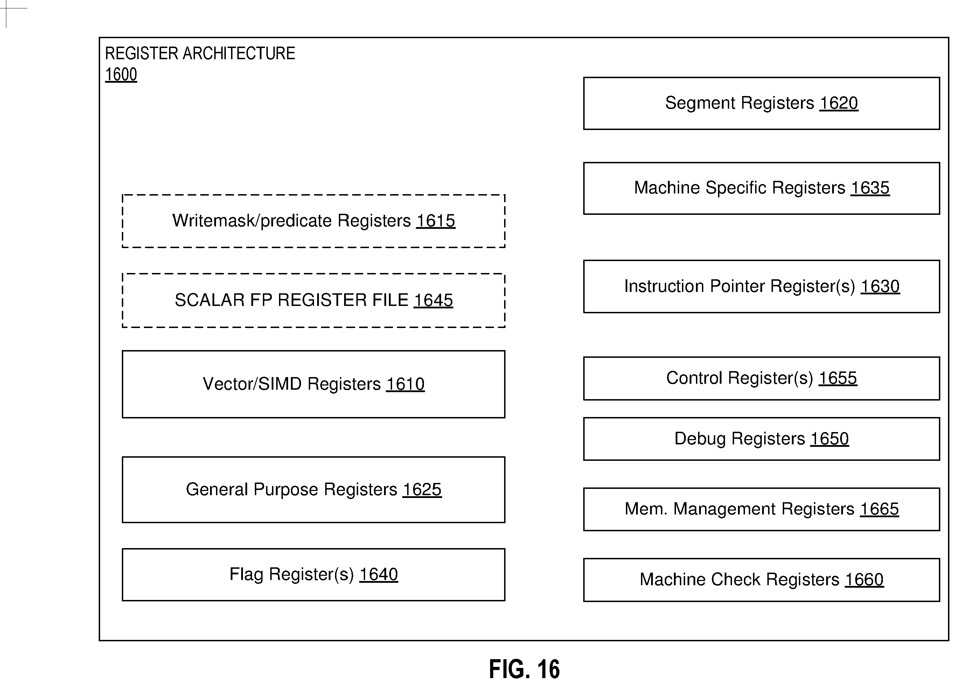

FIG. 16 is a block diagram of a register architecture 1600 according to some embodiments. As illustrated, there are vector/SIMD registers 1610 that vary from 128-bit to 1,024 bits width. In some embodiments, the vector/SIMD registers 1610 are physically 512-bits and, depending upon the mapping, only some of the lower bits are used. For example, in some embodiments, the vector/SIMD registers 1610 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 1600 includes writemask/predicate registers 1615. For example, in some embodiments, there are 8 writemask/predicate registers (sometimes called k0 through k7) that are each 16-bit, 32-bit, 64-bit, or 128-bit in size. Writemask/predicate registers 1615 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 1615 corresponds to a data element position of the destination. In other embodiments, the writemask/predicate registers 1615 are scalable and consists of a set number of enable bits for a given vector element (e.g., 8 enable bits per 64-bit vector element).

The register architecture 1600 includes a plurality of general-purpose registers 1625. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 1600 includes scalar floating-point register 1645 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 1640 (e.g., EFLAGS, RFLAGS, etc.) store status and control information for arithmetic, compare, and system operations. For example, the one or more flag registers 1640 may store condition code information such as carry, parity, auxiliary carry, zero, sign, and overflow. In some embodiments, the one or more flag registers 1640 are called program status and control registers.

Segment registers 1620 contain segment points for use in accessing memory. In some embodiments, these registers are referenced by the names CS, DS, SS, ES, FS, and GS.

Machine specific registers (MSRs) 1635 control and report on processor performance. Most MSRs 1635 handle system-related functions and are not accessible to an application program. Machine check registers 1660 consist of control, status, and error reporting MSRs that are used to detect and report on hardware errors.

One or more instruction pointer register(s) 1630 store an instruction pointer value. Control register(s) 1655 (e.g., CR0-CR4) determine the operating mode of a processor (e.g., processor 1270, 1280, 1238, 1215, and/or 1300) and the characteristics of a currently executing task. Debug registers 1650 control and allow for the monitoring of a processor or core's debugging operations.

Memory management registers 1665 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

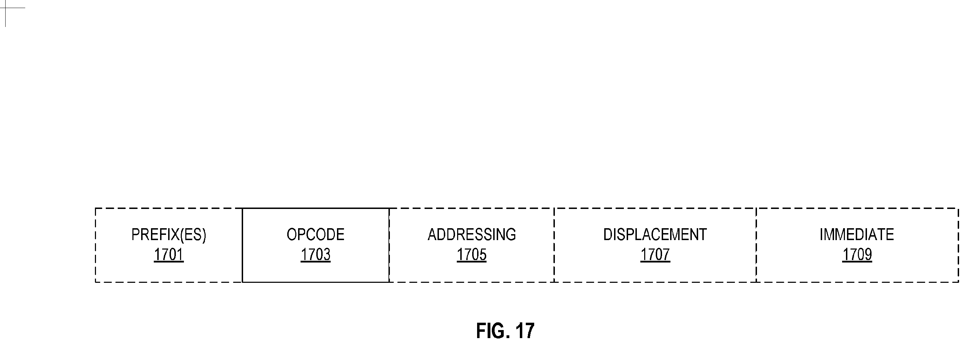

FIG. 17 illustrates embodiments of an instruction format. As illustrated, an instruction may include multiple components including, but not limited to, one or more fields for: one or more prefixes 1701, an opcode 1703, addressing information 1705 (e.g., register identifiers, memory addressing information, etc.), a displacement value 1707, and/or an immediate 1709. Note that some instructions utilize some or all of the fields of the format whereas others may only use the field for the opcode 1703. In some embodiments, the order illustrated is the order in which these fields are to be encoded, however, it should be appreciated that in other embodiments these fields may be encoded in a different order, combined, etc.

The prefix(es) field(s) 1701, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1703 is used to at least partially define the operation to be performed upon a decoding of the instruction. In some embodiments, a primary opcode encoded in the opcode field 1703 is 1, 2, or 3 bytes in length. In other embodiments, a primary opcode can be a different length. An additional 3-bit opcode field is sometimes encoded in another field.

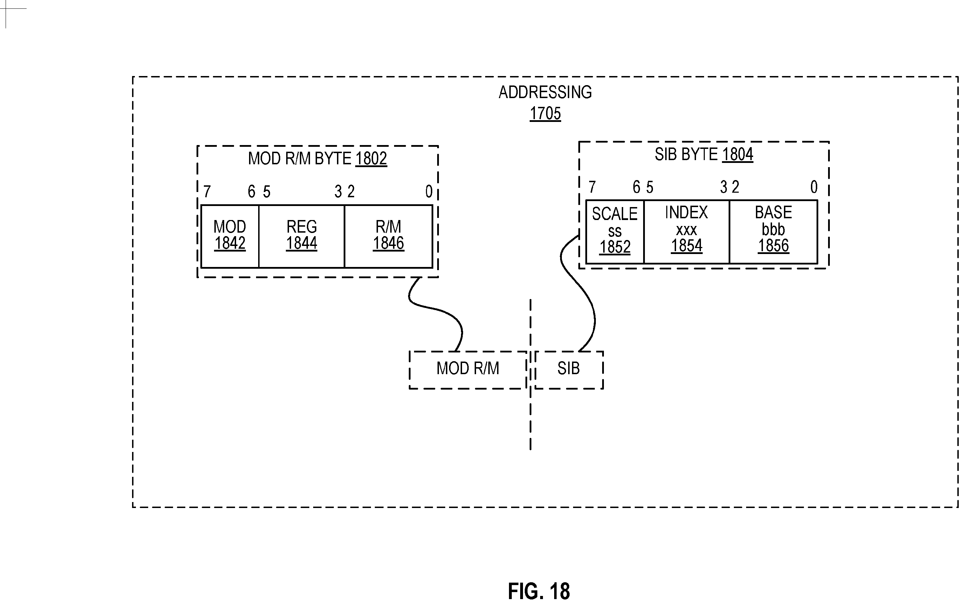

The addressing field 1705 is used to address one or more operands of the instruction, such as a location in memory or one or more registers. FIG. 18 illustrates embodiments of the addressing field 1705. In this illustration, an optional ModR/M byte 1802 and an optional Scale, Index, Base (SIB) byte 1804 are shown. The ModR/M byte 1802 and the SIB byte 1804 are used to encode up to two operands of an instruction, each of which is a direct register or effective memory address. Note that each of these fields are optional in that not all instructions include one or more of these fields. The MOD R/M byte 1802 includes a MOD field 1842, a register field 1844, and R/M field 1846.

The content of the MOD field 1842 distinguishes between memory access and non-memory access modes. In some embodiments, when the MOD field 1842 has a value of b11, a register-direct addressing mode is utilized, and otherwise register-indirect addressing is used.

The register field 1844 may encode either the destination register operand or a source register operand, or may encode an opcode extension and not be used to encode any instruction operand. The content of register index field 1844, directly or through address generation, specifies the locations of a source or destination operand (either in a register or in memory). In some embodiments, the register field 1844 is supplemented with an additional bit from a prefix (e.g., prefix 1701) to allow for greater addressing.

The R/M field 1846 may be used to encode an instruction operand that references a memory address, or may be used to encode either the destination register operand or a source register operand. Note the R/M field 1846 may be combined with the MOD field 1842 to dictate an addressing mode in some embodiments.

The SIB byte 1804 includes a scale field 1852, an index field 1854, and a base field 1856 to be used in the generation of an address. The scale field 1852 indicates scaling factor. The index field 1854 specifies an index register to use. In some embodiments, the index field 1854 is supplemented with an additional bit from a prefix (e.g., prefix 1701) to allow for greater addressing. The base field 1856 specifies a base register to use. In some embodiments, the base field 1856 is supplemented with an additional bit from a prefix (e.g., prefix 1701) to allow for greater addressing. In practice, the content of the scale field 1852 allows for the scaling of the content of the index field 1854 for memory address generation (e.g., for address generation that uses 2^{scale} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 1707 provides this value. Additionally, in some embodiments, a displacement factor usage is encoded in the MOD field of the addressing field 1705 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 1707.

In some embodiments, an immediate field 1709 specifies an immediate for the instruction. An immediate may be encoded as a 1-byte value, a 2-byte value, a 4-byte value, etc.

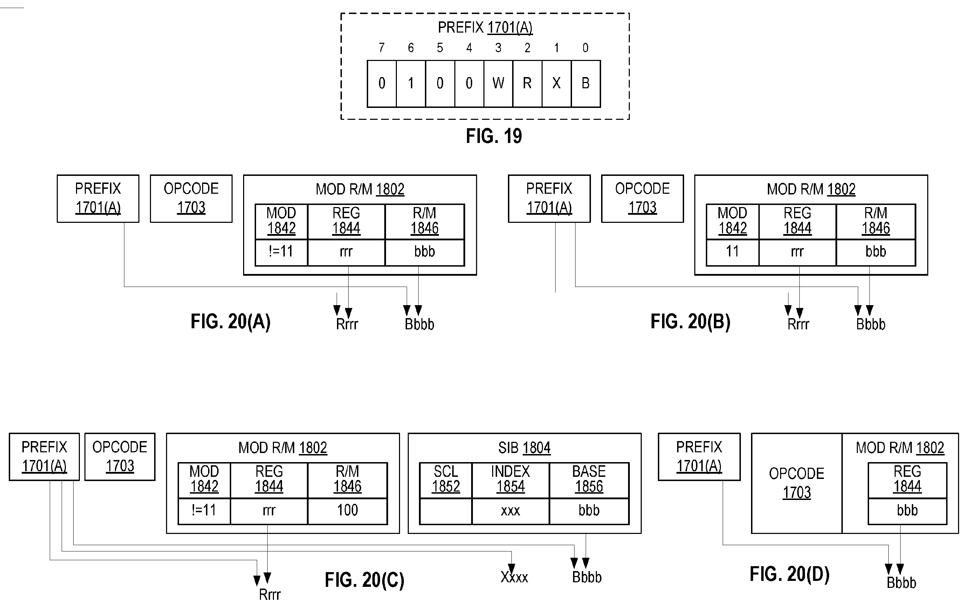

FIG. 19 illustrates embodiments of a first prefix 1701(A). In some embodiments, the first prefix 1701(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1701(A) may specify up to three registers using 3-bit fields depending on the format: 1) using the reg field 1844 and the R/M field 1846 of the Mod R/M byte 1802; 2) using the Mod R/M byte 1802 with the SIB byte 1804 including using the reg field 1844 and the base field 1856 and index field 1854; or 3) using the register field of an opcode.

In the first prefix 1701(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1844 and MOD R/M R/M field 1846 alone can each only address 8 registers.

In the first prefix 1701(A), bit position 2 (R) may an extension of the MOD R/M reg field 1844 and may be used to modify the ModR/M reg field 1844 when that field encodes a general purpose register, a 64-bit packed data register (e.g., a SSE register), or a control or debug register. R is ignored when Mod R/M byte 1802 specifies other registers or defines an extended opcode.

Bit position 1 (X) X bit may modify the SIB byte index field 1854.

Bit position B (B) B may modify the base in the Mod R/M R/M field 1846 or the SIB byte base field 1856; or it may modify the opcode register field used for accessing general purpose registers (e.g., general purpose registers 1625).

FIGS. 20(A)-(D) illustrate embodiments of how the R, X, and B fields of the first prefix 1701(A) are used. FIG. 20(A) illustrates R and B from the first prefix 1701(A) being used to extend the reg field 1844 and R/M field 1846 of the MOD R/M byte 1802 when the SIB byte 18 04 is not used for memory addressing. FIG. 20(B) illustrates R and B from the first prefix 1701(A) being used to extend the reg field 1844 and R/M field 1846 of the MOD R/M byte 1802 when the SIB byte 18 04 is not used (register-register addressing). FIG. 20(C) illustrates R, X, and B from the first prefix 1701(A) being used to extend the reg field 1844 of the MOD R/M byte 1802 and the index field 1854 and base field 1856 when the SIB byte 18 04 being used for memory addressing. FIG. 20(D) illustrates B from the first prefix 1701(A) being used to extend the reg field 1844 of the MOD R/M byte 1802 when a register is encoded in the opcode 1703.

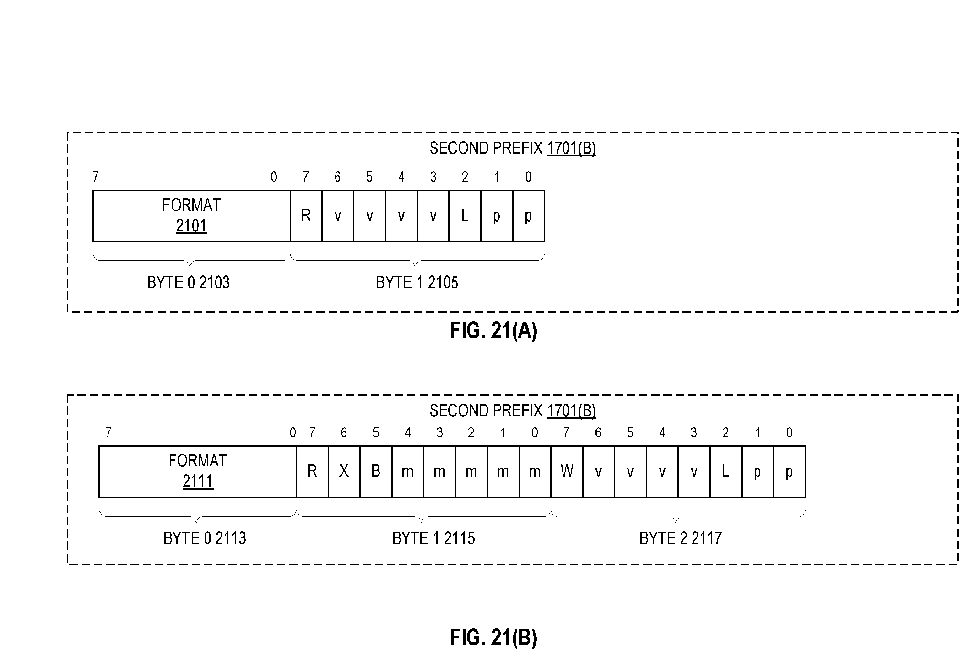

FIGS. 21(A)-(B) illustrate embodiments of a second prefix 1701(B). In some embodiments, the second prefix 1701(B) is an embodiment of a VEX prefix. The second prefix 1701(B) encoding allows instructions to have more than two operands, and allows SIMD vector registers (e.g., vector/SIMD registers 1610) to be longer than 64-bits (e.g., 128-bit and 256-bit). The use of the second prefix 1701(B) provides for three-operand (or more) syntax. For example, previous two-operand instructions performed operations such as A = A + B, which overwrites a source operand. The use of the second prefix 1701(B) enables operands to perform nondestructive operations such as A = B + C.

In some embodiments, the second prefix 1701(B) comes in two forms - a two-byte form and a three-byte form. The two-byte second prefix 1701(B) is used mainly for 128-bit, scalar, and some 256-bit instructions; while the three-byte second prefix 1701(B) provides a compact replacement of the first prefix 1701(A) and 3-byte opcode instructions.

FIG. 21(A) illustrates embodiments of a two-byte form of the second prefix 1701(B). In one example, a format field 2101 (byte 0 2103) contains the value C5H. In one example, byte 1 2105 includes a "R" value in bit[7]. This value is the complement of the same value of the first prefix 1701(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1846 to encode the instruction operand that references a memory address or encode either the destination register operand or a source register operand.

Instructions that use this prefix may use the Mod R/M reg field 1844 to encode either the destination register operand or a source register operand, be treated as an opcode extension and not used to encode any instruction operand.

For instruction syntax that support four operands, vvvv, the Mod R/M R/M field 1846 and the Mod R/M reg field 1844 encode three of the four operands. Bits[7:4] of the immediate 1709 are then used to encode the third source register operand.

FIG. 21(B) illustrates embodiments of a three-byte form of the second prefix 1701(B). in one example, a format field 2111 (byte 0 2113) contains the value C4H. Byte 1 2115 includes in bits[7:5] "R," "X," and "B" which are the complements of the same values of the first prefix 1701(A). Bits[4:0] of byte 1 2115 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 2117 is used similar to W of the first prefix 1701(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1846 to encode the instruction operand that references a memory address or encode either the destination register operand or a source register operand.

Instructions that use this prefix may use the Mod R/M reg field 1844 to encode either the destination register operand or a source register operand, be treated as an opcode extension and not used to encode any instruction operand.

For instruction syntax that support four operands, vvvv, the Mod R/M R/M field 1846, and the Mod R/M reg field 1844 encode three of the four operands. Bits[7:4] of the immediate 1709 are then used to encode the third source register operand.

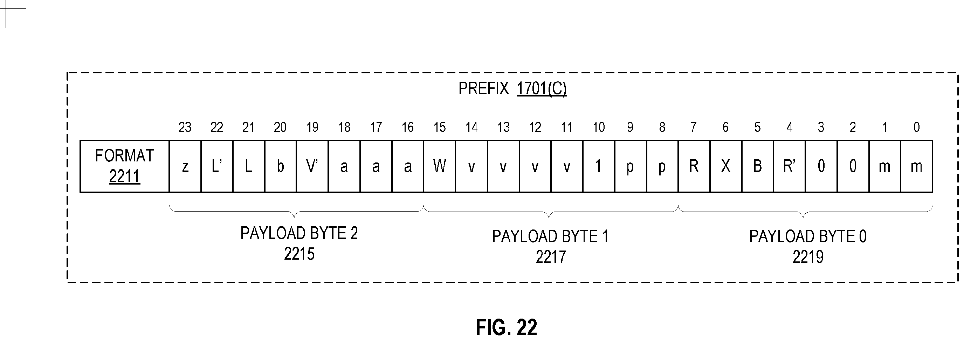

FIG. 22 illustrates embodiments of a third prefix 1701(C). In some embodiments, the first prefix 1701(A) is an embodiment of an EVEX prefix. The third prefix 1701(C) is a four-byte prefix.

The third prefix 1701(C) can encode 32 vector registers (e.g., 128-bit, 256-bit, and 512-bit registers) in 64-bit mode. In some embodiments, instructions that utilize a writemask/opmask (see discussion of registers in a previous figure, such as FIG. 16) or predication utilize this prefix. Opmask register allow for conditional processing or selection control. Opmask instructions, whose source/destination operands are opmask registers and treat the content of an opmask register as a single value, are encoded using the second prefix 1701(B).

The third prefix 1701(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1701(C) is a format field 2211 that has a value, in one example, of 62H. Subsequent bytes are referred to as payload bytes 2215-2219 and collectively form a 24-bit value of P[23:0] providing specific capability in the form of one or more fields (detailed herein).

In some embodiments, P[1:0] of payload byte 2219 are identical to the low two mmmmm bits. P[3:2] are reserved in some embodiments. Bit P[4] (R') allows access to the high 16 vector register set when combined with P[7] and the ModR/M reg field 1844. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 1844 and ModR/M R/M field 1846. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1701(A) and second prefix 1711(B) and may serve as an opcode extension bit or operand size promotion.

P[18:16] specify the index of a register in the opmask (writemask) registers (e.g., writemask/predicate registers 1615). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 1701(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | ModR/M reg | GPR, Vector | Destination or Source |
| VVVV | V' | vvvv | | GPR, Vector | 2nd Source or Destination |
| RM | X | B | ModR/M R/M | GPR, Vector | 1st Source or Destination |
| BASE | 0 | B | ModR/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | ModR/M reg | GPR, Vector | Destination or Source |
| VVVV | vvvv | GPR, Vector | 2^{nd} Source or Destination |
| RM | ModR/M R/M | GPR, Vector | 1^{st} Source or Destination |
| BASE | ModR/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | ModR/M Reg | k0-k7 | Source |
| VVVV | vvvv | k0-k7 | 2^{nd} Source |
| RM | ModR/M R/M | k0-7 | 1^{st} Source |
| {k1] | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores," may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

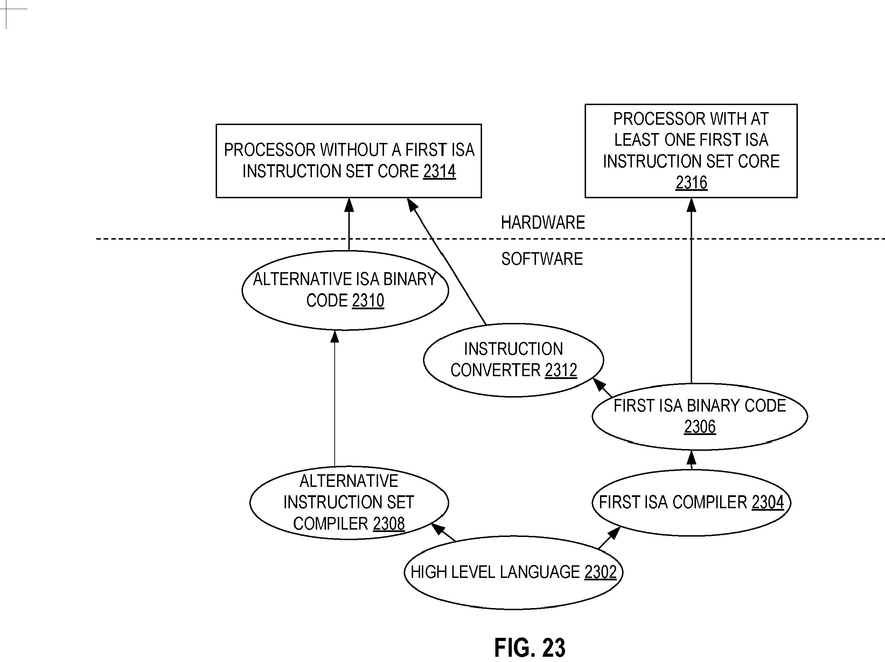

FIG. 23 illustrates a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. FIG. 23 shows a program in a high level language 2302 may be compiled using a first ISA compiler 2304 to generate first ISA binary code 2306 that may be natively executed by a processor with at least one first instruction set core 2316. The processor with at least one first ISA instruction set core 2316 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 2304 represents a compiler that is operable to generate first ISA binary code 2306 (e.g., object code) that can, with or without additional linkage processing, be executed on the processor with at least one first ISA instruction set core 2316. Similarly, FIG. 23 shows the program in the high level language 2302 may be compiled using an alternative instruction set compiler 2308 to generate alternative instruction set binary code 2310 that may be natively executed by a processor without a first ISA instruction set core 2314. The instruction converter 2312 is used to convert the first ISA binary code 2306 into code that may be natively executed by the processor without a first ISA instruction set core 2314. This converted code is not likely to be the same as the alternative instruction set binary code 2310 because an instruction converter capable of this is difficult to make; however, the converted code will accomplish the general operation and be made up of instructions from the alternative instruction set. Thus, the instruction converter 2312 represents software, firmware, hardware, or a combination thereof that, through emulation, simulation or any other process, allows a processor or other electronic device that does not have a first ISA instruction set processor or core to execute the first ISA binary code 2306.

Exemplary embodiments include, but are not limited to:
1. A system comprising:
   memory circuitry;
   memory security engine circuitry to generate, for each of a plurality of encrypted, compressed lines of data to be stored in the memory circuitry:
      compression metadata regarding compression used for each compressed line of data,
      error correction code (ECC) data associated with each compressed line of data, the ECC data to include a first tier of ECC data used for error correction and detection and a second tier of ECC data used for error correction alone, and
      at least a message authentication code associated with each compressed line of data, wherein the compression metadata and second tier of ECC data are stored with the compressed line of data.
2. The system of example 1, wherein the memory security engine circuitry the compressed lines of data are to be compressed using a compression engine employing an AES-based encryption scheme.
3. The system of example 1, wherein in response to a read request for a compressed line of data, the memory security engine circuitry is to receive the compressed line of data, first tier of ECC data, and the message authentication code associated with each compressed line of data, determine compression used from the compression metadata, utilize the first tier of ECC data to detect any error, decrypt the compressed line of data, and attempt to verify the compressed line of data using the message authentication code.
4. The system of example 3, wherein when the compressed line of data is not verified, the memory security engine circuitry is to signal a security exception.
5. The system of example 3, wherein when the compressed line of data is not verified, the memory security engine circuitry is to send the decrypted compressed line of data to a requester.
6. The system of example 3, wherein when there is a detected error, the second tier of ECC data is to be fetched from memory and the memory security engine circuitry is to correct the detected error using the first and second tiers of ECC data.
7. The system of example 1, wherein in response to a write request for a compressed line of data, the memory security engine circuitry is to, for successfully compressed data, encrypt the compressed data, and place the encrypted, compressed data in a cacheline and issue a write to memory.
8. The system of example 1, wherein in response to a write request for a compressed line of data, the memory security engine circuitry is to, for unsuccessfully compressed data, encrypt the uncompressed data, generate a message authentication code on the encrypted, uncompressed data, generate the ECC on the encrypted, uncompressed data, and issue two writes to memory.
9. The system of example 1, further comprising:
   a memory controller to read and write lines of data from the memory circuitry.
10. The system of example 1, wherein the compressed data is 384 bits in size, the compression metadata is 64 bits in size, and the second tier ECC data is 64 bits in size.
11. The system of example 1, wherein at least a proper subset of the memory circuitry supports ECC.
12. An apparatus comprising:
   memory security engine circuitry to generate, for each of a plurality of encrypted, compressed lines of data to be stored in the memory circuitry:
      compression metadata regarding compression used for each compressed line of data,
      error correction code (ECC) data associated with each compressed line of data, the ECC data to include a first tier of ECC data used for error correction and detection and a second tier of ECC data used for error correction alone, and
      at least a message authentication code associated with each compressed line of data, wherein the compression metadata and second tier of ECC data are stored with the compressed line of data; and
   a memory controller to read and write lines of data from and to memory.
13. The apparatus of example 12, wherein the memory security engine circuitry the compressed lines of data are to be compressed using a compression engine employing an AES-based encryption scheme.
14. The apparatus of example 12, wherein in response to a read request for a compressed line of data, the memory security engine circuitry is to receive the compressed line of data, first tier of ECC data, and the message authentication code associated with each compressed line of data, determine compression used from the compression metadata, utilize the first tier of ECC data to detect any error, decrypt the compressed line of data, and attempt to verify the compressed line of data using the message authentication code.
15. The apparatus of example 14, wherein when the compressed line of data is not verified, the memory security engine circuitry is to signal a security exception.
16. The apparatus of example 14, wherein when the compressed line of data is not verified, the memory security engine circuitry is to send the decrypted compressed line of data to a requester.
17. The apparatus of example 14, wherein when there is a detected error, the second tier of ECC data is to be fetched from memory and the memory security engine circuitry is to correct the detected error using the first and second tiers of ECC data.
18. The apparatus of example 12, wherein in response to a write request for a compressed line of data, the memory security engine circuitry is to, for successfully compressed data, encrypt the compressed data, and place the encrypted, compressed data in a cacheline and issue a write to memory.
19. The apparatus of example 12, wherein in response to a write request for a compressed line of data, the memory security engine circuitry is to, for unsuccessfully compressed data, encrypt the uncompressed data, generate a message authentication code on the encrypted, uncompressed data, generate the ECC on the encrypted, uncompressed data, and issue two writes to memory.
20. The apparatus of example 12, wherein the compressed data is 384 bits in size, the compression metadata is 64 bits in size, and the second tier ECC data is 64 bits in size.

References to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Moreover, in the various embodiments described above, unless specifically noted otherwise, disjunctive language such as the phrase "at least one of A, B, or C" is intended to be understood to mean either A, B, or C, or any combination thereof (e.g., A, B, and/or C). As such, disjunctive language is not intended to, nor should it be understood to, imply that a given embodiment requires at least one of A, at least one of B, or at least one of C to each be present.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. A system comprising:
memory circuitry;
memory security engine circuitry to generate, for each of a plurality of encrypted, compressed lines of data to be stored in the memory circuitry:
compression metadata regarding compression used for each compressed line of data,
error correction code (ECC) data associated with each compressed line of data, the ECC data to include a first tier of ECC data used for error correction and detection and a second tier of ECC data used for error correction alone, and
at least a message authentication code associated with each compressed line of data, wherein the compression metadata and second tier of ECC data are stored with the compressed line of data.

2. The system of claim 1, wherein the memory security engine circuitry the compressed lines of data are to be compressed using a compression engine employing an AES-based encryption scheme.

3. The system of any of claims 1-2, wherein in response to a read request for a compressed line of data, the memory security engine circuitry is to receive the compressed line of data, first tier of ECC data, and the message authentication code associated with each compressed line of data, determine compression used from the compression metadata, utilize the first tier of ECC data to detect any error, decrypt the compressed line of data, and attempt to verify the compressed line of data using the message authentication code.

4. The system of claim 3, wherein when the compressed line of data is not verified, the memory security engine circuitry is to signal a security exception.

5. The system of claim 3, wherein when the compressed line of data is not verified, the memory security engine circuitry is to send the decrypted compressed line of data to a requester.

6. The system of claim 3, wherein when there is a detected error, the second tier of ECC data is to be fetched from memory and the memory security engine circuitry is to correct the detected error using the first and second tiers of ECC data.

7. The system of any of claims 1-6, wherein in response to a write request for a compressed line of data, the memory security engine circuitry is to, for successfully compressed data, encrypt the compressed data, and place the encrypted, compressed data in a cacheline and issue a write to memory.

8. The system of any of claims 1-6, wherein in response to a write request for a compressed line of data, the memory security engine circuitry is to, for unsuccessfully compressed data, encrypt the uncompressed data, generate a message authentication code on the encrypted, uncompressed data, generate the ECC on the encrypted, uncompressed data, and issue two writes to memory.

9. The system of any of claims 1-8, further comprising:
a memory controller to read and write lines of data from the memory circuitry.

10. The system of any of claim 1-9, wherein the compressed data is 384 bits in size, the compression metadata is 64 bits in size, and the second tier ECC data is 64 bits in size.

11. The system of any of claims 1-10, wherein at least a proper subset of the memory circuitry supports ECC.
